# EUROPEAN PATENT APPLICATION

(11) **EP 4 017 201 A1**
(43) Date of publication of application: **22.06.2022**
(21) Application number: 20854195.3
(22) Date of filing: 10.08.2020
(51) Int. Cl.: H04W 74/08, H04L 12/807

(54) **CONTENTION WINDOW MAINTENANCE METHOD AND DEVICE**

(30) Priority: 16.08.2019 CN 201910760963
(71) Applicant: Huawei Technologies Co., Ltd., Longgang District Shenzhen, Guangdong 518129 (CN)
(72) Inventor: ZHANG, Jiayin, Shenzhen, Guangdong 518129 (CN); MAZZARESE, David Jean-Marie, Shenzhen, Guangdong 518129 (CN)
(74) Representative: MERH-IP Matias Erny Reichl Hoffmann Patentanwälte PartG mbB
(86) International application number: PCT/CN2020/108298
(87) International publication number: WO 2021/031914

(57) **Abstract**

This application discloses a contention window maintenance method and a device. In the method, a communications device may maintain a size of a contention window in a time window by using a first rule. In the method, flexibility of maintaining a contention window value by the communications device and accuracy of determining the contention window value by the communications device can be improved, so that a channel access delay of the communications device and a probability of a data transmission collision that occurs because different communications devices select a same contention window can be reduced while channel access fairness is ensured.

## Description

### CROSS-REFERENCE TO RELATED APPLICATIONS

This application claims priority to Chinese Patent Application No. 201910760963.4, filed with the China National Intellectual Property Administration on August 16, 2019 and entitled "CONTENTION WINDOW MAINTENANCE METHOD AND DEVICE", which is incorporated herein by reference in its entirety.

### TECHNICAL FIELD

This application relates to the field of communications technologies, and in particular, to a contention window maintenance method and a device.

### BACKGROUND

With rapid development of wireless communications technologies, spectrum resources are increasingly scarce. This promotes exploration on an unlicensed band. The 3rd generation partnership project (3rd generation partnership project, 3GPP) introduces license assisted access (license assisted access, LAA) and enhanced license assisted access (enhanced LAA, eLAA) technologies to a release 13 (Release-13, R-13) and R-14 respectively. In other words, a communications system is deployed on an unlicensed spectrum in a non-standalone (Non-standalone) manner. The communications system can use an unlicensed spectrum resource with assistance of a licensed spectrum to a greatest extent.

The communications system deployed on the unlicensed spectrum usually uses/shares a radio resource through contention. Communications devices fairly contend for and use unlicensed spectrum resources by using a same rule or similar rules. Generally, before sending a signal, the communications device first determines, through listening, whether an unlicensed spectrum (namely, channel) is idle. When detecting, through listening, that the unlicensed spectrum is in an idle state, the communications device may send a signal on the unlicensed spectrum; otherwise, the communications device does not send a signal. This listen before talk mechanism is referred to as a listen before talk (listen before talk, LBT) mechanism.

A main idea of the LBT mechanism is as follows: Before the communications device needs to send data, the communications device needs to perform a contention process (also referred to as a random backoff process). The contention process is as follows:
S1: The communications device randomly selects a number of contention n (also referred to as a random backoff count) from an interval (0, CW] including contention window (contention window, CW) values, and initializes a contention count counter to n. The contention count n is used to represent random backoff duration of the communications device.
S2: In a contention window, when the contention count counter is greater than 0, the communications device decreases the contention count counter by 1, and detects a status of a channel in a next observation slot; and when the contention count counter is equal to 0, performs S5.
S3: When detecting that the channel is idle, the communications system continues to perform S2.
S4: When it is detected that the channel is busy, stop counting of the contention count counter, detect the status of the channel within a delay time, and after it is constantly detected that the channel is idle within the delay time, enable counting of the contention count counter, and continue to perform S2.
S5: The communications device sends data on the channel.

When a plurality of communications devices in the communications system select a same random number during LBT, the plurality of communications devices may end LBT at a same moment, and simultaneously send data. Consequently, data transmission of the plurality of communications devices collides, and mutual interference occurs, finally leading to a data transmission failure. To avoid the data transmission collision, a current standard can only specify that a communications device can determine a data sending status based on a response fed back by a receive end, to adjust a contention window CW value used by next LBT.

For example, when determining that a proportion of currently successfully sent data reaches a first threshold, the communications device maintains a current CW or decreases a CW; or when determining that a proportion of currently unsuccessfully sent data reaches a second threshold, the communications device increases the CW.

However, due to various reasons, the communications device may be unable to receive, in a timely manner, the response fed back by the receive end. For example, the receive end needs time to perform LBT channel contention and send the response. Therefore, the data sending status determined by the communications device in the foregoing method based on the response fed back by the receive end is inaccurate, in other words, the sending status determined by the communications device cannot accurately reflect whether current data transmission collides.

### SUMMARY

This application provides a contention window maintenance method and a device, to reduce, while ensuring channel access fairness, a channel access delay and a probability of a data transmission collision that occurs because different communications devices select a same contention window.

According to a first aspect, an embodiment of this application provides a contention window maintenance method. The method may be applied to a network device or a terminal device (referred to as a communications device below) that supports use of an unlicensed spectrum and that uses an LBT mechanism for channel contention. The method may include the following steps.

The communications device determines first reference time, where the communications device has sent N pieces of first reference data within the first reference time, and N is an integer greater than 0; and the communications device maintains a contention window value in a first time window by using a first rule, based on responses of the N pieces of first reference data.

In the method, the communications device sets specific buffer time (namely, time window) for receiving a response. Within the buffer time, the communications device maintains a contention window value by using the first rule different from that in the conventional technology, so that flexibility of maintaining the contention window value by the communications device and accuracy of determining the contention window value by the communications device can be improved. Therefore, while ensuring channel access fairness, the method can reduce a channel access delay of the communications device and a probability of a data transmission collision that occurs because different communications devices select a same contention window.

In a possible design, the method further includes: The communications device maintains, after the first time window, the contention window value by using a second rule, based on the responses of the N pieces of first reference data. After the first time window ends, a relatively large number of responses are not received by the communications device. These responses can reflect a current data transmission environment to some extent. Therefore, accuracy of determining the contention window value when the communications device maintains the contention window value by using the second rule can be improved.

In a possible design, the communications device may maintain, by performing the following step, the contention window value by using the first rule: The communications device increases the contention window value based on a current contention window value when a proportion of first target reference data in the N pieces of first reference data does not exceed a first threshold or a proportion of second target reference data in the N pieces of first reference data exceeds a second threshold; or the communications device adjusts the contention window value to a minimum contention window value when the proportion of the first target reference data in the N pieces of first reference data exceeds the first threshold or the proportion of the second target reference data in the N pieces of first reference data does not exceed the second threshold. The first target reference data is first reference data for which the communications device receives a success response ACK, and the second target reference data is first reference data for which the communications device does not receive an ACK.

Optionally, in this design, a sum of the first threshold and the second threshold is equal to 1.

It should be noted that specific values of the first threshold and the second threshold are not limited in this embodiment of this application.

Because the contention window value is maintained in the first time window, a relatively large number of responses are not received by the communications device due to an LBT failure of a receive end or another case. In this case, when the communications device does not receive ACKs of some first reference data, the communications device may incorrectly count the first reference data as unsuccessfully transmitted first reference data, and incorrectly adjust and increase the contention window value when the contention window value originally needs to be adjusted to the minimum contention window value. This increases a channel access delay of the communications device and finally affects channel access fairness of the communications device.

In an example of this implementation, to resolve the foregoing problem, the second threshold (for example, 90%) is set to be greater than a failure threshold (for example, 80%) in a conventional maintenance method. In this way, in the method, a condition for increasing the contention window value can be more stringent, so that a probability that the communications device increases the contention window value due to an ACK response delay is reduced, thereby ensuring a channel access speed of the communications device and finally ensuring channel access fairness of the communications device.

In a possible design, the communications device may maintain, by performing the following step, the contention window value by using the first rule: The communications device adjusts the contention window value to a minimum contention window value when a proportion of first target reference data in the N pieces of first reference data exceeds a third threshold; or the communications device increases the contention window value based on a current contention window value when a proportion of third target reference data in the N pieces of first reference data exceeds a fourth threshold; or the communications device does not adjust the contention window value when the proportion of the first target reference data in the N pieces of first reference data does not exceed the third threshold and the proportion of the third target reference data in the N pieces of first reference data does not exceed the fourth threshold. The first target reference data is first reference data for which the communications device receives an ACK, and the third target reference data is first reference data for which the communications device receives a failure response NACK.

Optionally, in this design, a sum of the third threshold and the fourth threshold is equal to 1.

It should be noted that specific values of the third threshold and the fourth threshold are not limited in this embodiment of this application.

Because the contention window value is maintained in the first time window, a relatively large number of responses are not received by the communications device due to an LBT failure of a receive end or another case. In this case, the response that is not received by the communications device may be an ACK, or may be a NACK. In this implementation, when maintaining the contention window value, the communications device considers only first reference data for which an ACK and a NACK are received, and does not collect statistics about first reference data for which DTX is received. In this way, the following case can be avoided: Because an ACK of first reference data is not received due to a delay, the first reference data is incorrectly counted as first reference data for which DTX is received. Because a number of pieces of first reference data for which a NACK is received is less than or equal to a number of pieces of first reference data for which an ACK is not received, even if the fourth threshold is the same as or close to a failure threshold (for example, 80%) in the conventional technology, a condition for increasing the contention window value can be more stringent, thereby reducing a probability of increasing the contention window value, ensuring a channel access speed of the communications device, and finally ensuring channel access fairness of the communications device.

Further, because the fourth threshold is the same as or close to the failure threshold (for example, 80%) in the conventional technology, the third threshold is the same as or close to a success threshold (for example, 20%) in the conventional technology. Therefore, in this implementation, it can be ensured that a condition for adjusting the contention window value to the minimum value is not loosened, so that a probability of adjusting the contention window value to the minimum value is not increased, thereby further reducing a probability of a data transmission collision that occurs because the communications device decreases the contention window value.

In addition, in this design, when the responses of the N pieces of first reference data meet neither the condition for increasing the contention window value nor a condition for decreasing contention window data, the communications device may keep the contention window value unchanged. In this way, a channel access speed of the communications device can be ensured, and a probability of a data transmission collision that occurs because the communications device decreases the contention window value can also be reduced.

In a possible design, the communications device may maintain, by performing the following step, the contention window value by using the first rule: The communications device does not adjust the contention window value when a proportion of fourth target reference data in the N pieces of first reference data does not exceed a fifth threshold; or the communications device adjusts, by performing the following step, the contention window value when the proportion of the fourth target reference data in the N pieces of first reference data exceeds the fifth threshold:

The communications device increases the contention window value based on a current contention window value when a proportion of first target reference data in the fourth target reference data does not exceed a sixth threshold or a proportion of third target reference data in the fourth target reference data exceeds a seventh threshold; or the communications device adjusts the contention window value to a minimum contention window value when the proportion of the first target reference data in the fourth target reference data exceeds the sixth threshold or the proportion of the third target reference data in the fourth target reference data does not exceed the seventh threshold. The fourth target reference data is first reference data for which the communications device receives an ACK and first reference data for which the communications device receives a NACK, the first target reference data is the first reference data for which the communications device receives an ACK, and the third target reference data is the first reference data for which the communications device receives a NACK.

Optionally, in this design, a sum of the sixth threshold and the seventh threshold is equal to 1.

It should be noted that specific values of the sixth threshold and the seventh threshold are not limited in this embodiment of this application.

Because the contention window value is maintained in the first time window, a relatively large number of responses are not received by the communications device due to an LBT failure of a receive end or another case. When there are a relatively small number of pieces of first reference data (namely, the fourth target reference data) for which the communications device receives a response, a proportion, in the N pieces of first reference data, of the first reference data for which an ACK is received is relatively small. If the communications device still maintains the contention window value according to a conventional method, a probability that the communications device increases the contention window value is relatively large. This increases a channel access delay of the communications device and finally affects channel access fairness of the communications device.

To resolve the foregoing problem, the communications device determines, based on the following two proportions that can better reflect an actual ACK and NACK distribution status, whether to increase the contention window value or to adjust the contention window value to the minimum contention window value, so that accuracy of the determined contention window value can be improved: a proportion, in the first reference data for which an ACK and a NACK are received, of the first reference data for which an ACK is received and a proportion, in the first reference data for which an ACK and a NACK are received, of the first reference data for which a NACK is received. Therefore, in this implementation, a channel access speed of the communications device can be ensured, and a probability of a data transmission collision that occurs because the communications device decreases the contention window value can also be reduced.

In addition, when there are a very small number of pieces of first reference data (namely, the fourth target reference data) for which the communications device receives a response, the actual ACK and NACK distribution status cannot be accurately reflected even if the foregoing two proportions are used. To ensure a channel access speed of the communications device and also reduce a probability of a data transmission collision that occurs because the communications device decreases the contention window value, the communications device may keep the contention window value unchanged in this case.

It should be noted that a specific value of the fifth threshold is not limited in this embodiment of this application. Optionally, the fifth threshold may be set to a relatively small value such as 0% or 1%.

In a possible design, the communications device may maintain, by performing the following step, the contention window value by using the first rule: The communications device increases the contention window value based on a current contention window value when a proportion of fourth target reference data in the N pieces of first reference data does not exceed an eighth threshold or a proportion of fifth target reference data in the N pieces of first reference data exceeds a ninth threshold; or the communications device adjusts the contention window value to a minimum contention window value when the proportion of the fourth target reference data in the N pieces of first reference data exceeds the eighth threshold or the proportion of the fifth target reference data in the N pieces of first reference data does not exceed the ninth threshold. The fourth target reference data is first reference data for which the communications device receives an ACK and first reference data for which the communications device receives a NACK, and the fifth target reference data is first reference data for which the communications device does not receive an ACK or a NACK in the N pieces of first reference data.

Optionally, in this design, a sum of the eighth threshold and the ninth threshold is equal to 1.

It should be noted that specific values of the eighth threshold and the ninth threshold are not limited in this embodiment of this application.

Because the contention window value is maintained in the first time window, a relatively large number of responses are not received by the communications device due to an LBT failure of a receive end or another case. The communications device may not receive a response due to a data transmission collision. Therefore, when there are a relatively small number of pieces of first reference data for which the communications device receives a response (an ACK and a NACK), it indicates that there are a relatively large number of pieces of first reference data for which a valid response is not received (or DTX is received), and a probability of a data transmission collision is relatively large. Therefore, the communications device may increase the contention window value to reduce a probability of a transmission collision occurring in a subsequent data transmission process.

Correspondingly, when there are a relatively large number of pieces of first reference data for which the communications device receives a response (an ACK and a NACK), it indicates that there are a relatively small number of pieces of first reference data for which a response is not received (or DTX is received), and a probability of a data transmission collision is relatively small. Therefore, the communications device may adjust the contention window value to the minimum contention window value. In this way, a channel access speed of the communications device can be improved.

In a possible design, occasions on which the communications device maintains, after the first time window, the contention window value by using the second rule may include but are not limited to the following occasions.

Occasion 1: When the first time window ends, the communications device maintains the contention window value by using the second rule based on the responses of the N pieces of first reference data.

Occasion 2: When receiving a response of at least one piece of first reference data after the first time window ends, the communications device maintains the contention window value by using the second rule based on the responses of the N pieces of first reference data.

Occasion 3: Before performing a data transmission process after the first time window ends, the communications device maintains the contention window value by using the second rule based on the responses of the N pieces of first reference data.

In this design, flexibility of maintaining the contention window by the communications device after the first time window ends can be improved.

In a possible design, the communications device may maintain, by performing the following step, the contention window value by using the second rule: The communications device increases the contention window value based on the current contention window value when the proportion of the first target reference data in the N pieces of first reference data does not exceed a tenth threshold or the proportion of the second target reference data in the N pieces of first reference data exceeds an eleventh threshold; or the communications device adjusts the contention window value to the minimum contention window value when the proportion of the first target reference data in the N pieces of first reference data exceeds the tenth threshold or the proportion of the second target reference data in the N pieces of first reference data does not exceed the eleventh threshold. The first target reference data is the first reference data for which the communications device receives a success response ACK, and the second target reference data is the first reference data for which the communications device does not receive an ACK.

Optionally, in this design, a sum of the tenth threshold and the eleventh threshold is equal to 1.

It should be noted that specific values of the tenth threshold and the eleventh threshold are not limited in this embodiment of this application.

Because the contention window value is maintained after the first time window ends, a relatively small number of responses are not received by the communications device due to an LBT failure of the receive end or another case. Therefore, after the first time window ends, the communications device may maintain the contention window value by using a transmission method. Because a proportion, in the N pieces of first reference data, of the first reference data for which an ACK is received and a proportion, in the N pieces of first reference data, of the first reference data for which an ACK is not received can reflect an actual response state distribution status, accuracy of the determined contention window value can be improved by using the foregoing implementation. Therefore, in this implementation, a channel access speed of the communications device can be ensured, and a probability of a data transmission collision that occurs because the communications device decreases the contention window value can also be reduced.

Optionally, the tenth threshold may be the same as or close to the success threshold in the conventional technology. Correspondingly, the eleventh threshold may be the same as or close to the failure threshold in the conventional technology.

In a possible design, the communications device may maintain, by performing the following step, the contention window value by using the second rule: The communications device increases the contention window value based on the current contention window value when the proportion of the fourth target reference data in the N pieces of first reference data does not exceed a twelfth threshold or the proportion of the fifth target reference data in the N pieces of first reference data exceeds a thirteenth threshold; or the communications device adjusts the contention window value to the minimum contention window value when the proportion of the fourth target reference data in the N pieces of first reference data exceeds the twelfth threshold or the proportion of the fifth target reference data in the N pieces of first reference data does not exceed the thirteenth threshold. The fourth target reference data is the first reference data for which the communications device receives an ACK and the first reference data for which the communications device receives a NACK, and the fifth target reference data is the first reference data for which the communications device does not receive an ACK or a NACK in the N pieces of first reference data.

Optionally, in this design, a sum of the twelfth threshold and the thirteenth threshold is equal to 1.

It should be noted that specific values of the twelfth threshold and the thirteenth threshold are not limited in this embodiment of this application.

The communications device may not receive a response due to a data transmission collision. Therefore, when there are a relatively small number of pieces of first reference data for which the communications device receives a response (an ACK and a NACK), it indicates that there are a relatively large number of pieces of first reference data for which a response is not received (or DTX is received), and a probability of a data transmission collision is relatively large. Therefore, the communications device may increase the contention window value to reduce a probability of a transmission collision occurring in a subsequent data transmission process.

Correspondingly, when there are a relatively large number of pieces of first reference data for which the communications device receives a response (an ACK and a NACK), it indicates that there are a relatively small number of pieces of first reference data for which a response is not received (or DTX is received), and a probability of a data transmission collision is relatively small. Therefore, the communications device may adjust the contention window value to the minimum contention window value. In this way, a channel access speed of the communications device can be improved.

In a possible design, when receiving a response of any piece of first reference data at least once, the communications device uses a last received response of the first reference data as a final response of the first reference data, and maintains the contention window value by using the first rule or the second rule based on a final response of each piece of first reference data.

Because the last received response of each piece of reference data can more accurately reflect a current network transmission status, the communications device maintains the contention window value based on the last received response of each piece of reference data, so that accuracy of the determined contention window value can be improved, thereby reducing, while ensuring channel access fairness, a channel access delay of the communications device and a probability of a data transmission collision that occurs because different communications devices select a same contention window.

In a possible design, a start moment of the first time window precedes or follows the first reference time, where when the start moment of the first time window precedes the first reference time, an end moment of the first time window follows the first reference time; or the start moment of the first time window follows a data transmission process in which the first reference time is located; or the start moment of the first time window precedes or follows a preset target time domain resource, where the target time domain resource is a preset earliest time domain resource used for transmitting the responses of the N pieces of first reference data. In this design, flexibility of a location of the first time window can be improved.

In a possible design, a size of the first time window may be preset, be agreed upon between the communications device and a receive end, be configured by the communications device for the receive end, or be equal to maximum duration for which the receive end waits for the communications device to schedule a response resource.

In a possible design, the first time window is maintained by using a timer.

In a possible design, the first reference time is located in an L^{th} data transmission process, the first time window corresponds to the first reference time, and L is an integer greater than 0; and the method further includes the following steps:

The communications device determines K^{th} reference time, where the second reference time is located in an (L+K)^{th} data transmission process, the communications device has sent M pieces of second reference data within the K^{th} reference time, M is an integer greater than 0, and K is an integer greater than 1; and the communications device receives a response of at least one piece of (K-Y)^{th} reference data after the K^{th} reference time, where the (K-Y)^{th} reference data is reference data that has been sent within (K-Y)^{th} reference time, the (K-Y)^{th} reference time is located in an (L+K-Y)^{th} data transmission process, and Y is an integer greater than 0 and less than K. The communications device redetermines, based on a contention window actually used in the (L+K-Y)^{th} data transmission process and a last received response of each piece of (K-Y)^{th} reference data, a contention window value that needs to be used in an (L+K-Y+1)^{th} data transmission process. The communications device determines, based on a contention window value that needs to be used in a previous data transmission process and a last received response of reference data that has been sent within reference time in the previous data transmission process, a contention window value that needs to be used in a current data transmission process; and repeats the foregoing step until a contention window value that needs to be used in the (L+K)^{th} data transmission process is determined. The communications device updates the current contention window value to the contention window value that needs to be used in the (L+K)^{th} data transmission process. The communications device maintains, in a K^{th} time window corresponding to the K^{th} reference time, the contention window value by using the first rule based on responses of the M pieces of second reference data. After the K^{th} time window corresponding to the K^{th} reference time ends, the communications device maintains the contention window value by using the second rule based on the responses of the M pieces of second reference data.

In this design, when receiving a response of reference data for maintaining a contention window value a previous time, the communications device backs off, based on the most recently received response of the reference data, to the time to re-maintain the contention window value, and sequentially re-maintains subsequent contention window values until a current contention window value is determined. Because an error exists in a previously used response of reference data, an error may exist in a contention window value determined the previous time, and errors are accumulated through a plurality of times of subsequent maintenance, affecting accuracy of the contention window value. Therefore, in the method, a previously determined contention window value may be corrected based on a latest response of reference data, and subsequently determined contention window values may be sequentially corrected, so that error accumulation of the contention window value is avoided, thereby improving accuracy of a finally determined contention window value.

According to a second aspect, an embodiment of this application further provides a contention window maintenance method. The method may be applied to a network device or a terminal device (referred to as a communications device below) that supports use of an unlicensed spectrum and that uses an LBT mechanism for channel contention. The method may include the following steps.

The communications device determines reference time, where the communications device has sent N pieces of reference data within the first reference time, and N is an integer greater than 0. The communications device receives a response of any piece of first reference data at least once after the reference time. The communications device maintains a contention window value based on a last received response of each piece of reference data.

Because the last received response of each piece of reference data can more accurately reflect a current network transmission status, the communications device maintains the contention window value based on the last received response of each piece of reference data, so that accuracy of the determined contention window value can be improved, thereby reducing, while ensuring channel access fairness, a channel access delay of the communications device and a probability of a data transmission collision that occurs because different communications devices select a same contention window.

According to a third aspect, an embodiment of this application further provides a contention window maintenance method. The method may be applied to a network device or a terminal device (referred to as a communications device below) that supports use of an unlicensed spectrum and that uses an LBT mechanism for channel contention. The method may include the following steps.

The communications device determines reference time, where the communications device has sent N pieces of reference data within the first reference time, and N is an integer greater than 0. The communications device adjusts a contention window value to a minimum contention window value when a proportion of first target reference data in the N pieces of reference data exceeds a first threshold; or the communications device increases the contention window value based on a current contention window value when a proportion of second target reference data in the N pieces of reference data exceeds a second threshold; or the communications device does not adjust the contention window value when the proportion of the first target reference data in the N pieces of reference data does not exceed the first threshold and the proportion of the second target reference data in the N pieces of reference data does not exceed the second threshold. The first target reference data is reference data for which the communications device receives an ACK, and the second target reference data is reference data for which the communications device receives a failure response NACK.

According to a fourth aspect, an embodiment of this application further provides a contention window maintenance method. The method may be applied to a network device or a terminal device (referred to as a communications device below) that supports use of an unlicensed spectrum and that uses an LBT mechanism for channel contention. The method may include the following steps.

The communications device determines reference time, where the communications device has sent N pieces of reference data within the first reference time, and N is an integer greater than 0. The communications device does not adjust a contention window value when a proportion of first target reference data in the N pieces of reference data does not exceed a first threshold; or the communications device adjusts, by performing the following step, the contention window value when the proportion of the first target reference data in the N pieces of reference data exceeds the first threshold:

The communications device increases the contention window value based on a current contention window value when a proportion of second target reference data in the first target reference data does not exceed a second threshold or a proportion of third target reference data in the first target reference data exceeds a third threshold; or
the communications device adjusts the contention window value to a minimum contention window value when the proportion of the second target reference data in the first target reference data exceeds the second threshold or the proportion of the third target reference data in the first target reference data does not exceed the third threshold.

The first target reference data is reference data for which the communications device receives an ACK and reference data for which the communications device receives a NACK, the second target reference data is the reference data for which the communications device receives an ACK, and the third target reference data is the reference data for which the communications device receives a NACK.

According to a fifth aspect, an embodiment of this application further provides a contention window maintenance method. The method may be applied to a network device or a terminal device (referred to as a communications device below) that supports use of an unlicensed spectrum and that uses an LBT mechanism for channel contention. The method may include the following steps.

The communications device determines reference time, where the communications device has sent N pieces of reference data within the first reference time. The communications device increases a contention window value based on a current contention window value when a proportion of first target reference data in the N pieces of reference data does not exceed a first threshold or a proportion of second target reference data in the N pieces of reference data exceeds a second threshold; or the communications device adjusts the contention window value to a minimum contention window value when the proportion of the first target reference data in the N pieces of reference data exceeds the first threshold or the proportion of the second target reference data in the N pieces of reference data does not exceed the second threshold. The first target reference data is reference data for which the communications device receives an ACK and reference data for which the communications device receives a NACK, and the second target reference data is reference data for which the communications device does not receive an ACK or a NACK in the N pieces of reference data.

In a possible design of any one of the foregoing methods, the communications device may increase the contention window value based on the current contention window value by using the following methods, for example.

Method 1: The communications device multiplies the current contention window value according to a conventional method. For a specific process, refer to a formula: CWp=(CW+1)^{∗}m-1, where m≥2.

Method 2: The communications device presets a plurality of levels within a range of a minimum contention window value CWmin,p and a maximum contention window value CWmax,p, for example, CW1,p (namely, CWmin,p), CW2,p, CW2,p, ..., and CWf,p (namely, CWmax,p). When increasing the contention window value based on the current contention window value CWp, the communications device may determine a level of the current contention window value, and then adjust the contention window value to a next higher level of the level. For example, when the current contention window value CWp is CWi,p, the communications device may adjust the contention window value CWp to CWi+1,p.

Method 3: The network device increases the current contention window value by a fixed value.

In this design, flexibility of increasing the contention window value by the communications device can be improved.

According to a sixth aspect, an embodiment of this application provides a communications device, including a unit configured to perform steps in any one of the foregoing aspects.

According to a seventh aspect, an embodiment of this application provides a communications device, including at least one processing element and at least one storage element. The at least one storage element is configured to store a program and data. The at least one processing element is configured to perform the method according to any one of the foregoing aspects of this application.

According to an eighth aspect, an embodiment of this application further provides a computer program. When the computer program is run on a computer, the computer is enabled to perform the method according to any one of the foregoing aspects.

According to a ninth aspect, an embodiment of this application further provides a computer storage medium. The computer storage medium stores a computer program. When the computer program is executed by a computer, the computer is enabled to perform the method according to any one of the foregoing aspects.

According to a tenth aspect, an embodiment of this application further provides a chip. The chip is configured to read a computer program stored in a memory, to perform the method according to any one of the foregoing aspects.

According to an eleventh aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1A is a schematic diagram of a communications system according to an embodiment of this application;
FIG. 1B is a schematic diagram of a communications system according to an embodiment of this application;
FIG. 2 is a flowchart of a contention window maintenance method according to an embodiment of this application;
FIG. 3 is a diagram of an instance of a start moment of a time window D corresponding to reference time k according to an embodiment of this application;
FIG. 4A and FIG. 4B are a schematic diagram of a contention window maintenance instance according to an embodiment of this application;
FIG. 5A and FIG. 5B are a schematic diagram of another contention window maintenance instance according to an embodiment of this application;
FIG. 6 is a schematic diagram of another contention window maintenance instance according to an embodiment of this application;
FIG. 7A is a schematic diagram of another contention window maintenance instance according to an embodiment of this application;
FIG. 7B is a schematic diagram of another contention window maintenance instance according to an embodiment of this application;
FIG. 7C is a schematic diagram of another contention window maintenance instance according to an embodiment of this application;
FIG. 8 is a schematic diagram of another contention window maintenance instance according to an embodiment of this application;
FIG. 9 is a diagram of a structure of a communications device according to an embodiment of this application; and
FIG. 10 is a diagram of a structure of another communications device according to an embodiment of this application.

### DESCRIPTION OF EMBODIMENTS

This application provides a contention window adjustment method and a device, to reduce, while ensuring channel access fairness, a channel access delay and a probability of a data transmission collision that occurs because different communications devices select a same contention window. The method and the device are based on a same inventive concept. Because a problem-resolving principle of the method is similar to that of the device, mutual reference may be made to implementations of the method and the device, and repeated description is not provided.

In the following, some terms in this application are described, to help a person skilled in the art have a better understanding.
(1) A communications device is a device with a data transmission communication function in a communications system. In this application, the communications device uses an unlicensed spectrum resource through LBT contention.

Optionally, the communications device may be a network device, a terminal device, a relay device, or the like. This is not limited in this application.

(2) A network device is a device that is in a communications system and that connects a terminal device to a wireless network. The network device is a node in a radio access network, and may also be referred to as a base station or a radio access network (radio access network, RAN) node (or device).

Currently, some examples of the network device are: a gNB, a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, the network device may include a central unit (central unit, CU) node and a distributed unit (distributed unit, DU) node. In this structure, protocol layers of an eNB in a long term evolution (long term evolution, LTE) system are separated. Functions of some protocol layers are all controlled by a CU, and functions of some or all of remaining protocol layers are distributed in DUs. The DUs are all controlled by the CU.

(3) A terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a handheld device, any vehicle-mounted device, or a roadside unit with a wireless connection function. Currently, some examples of the terminal device are a mobile phone (mobile phone), a tablet computer, a notebook computer, a laptop computer, a mobile internet device (mobile internet device, MID), a smart point of sale (point of sale, POS), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electricity meter, and a smart gas meter), eLTE-DSA UE, a device with an integrated access and backhaul (integrated access and backhaul, IAB) capability, an in-vehicle electronic control unit (electronic control unit, ECU) and the like, an in-vehicle computer, an in-vehicle cruise system, a telematics box (telematics box, T-BOX), and the like.

(4) A relay device is a device that has a bridging function and that can establish a wireless connection to a terminal device, a network device, or another relay device. When there is a relatively large physical distance or there is an obstacle between the terminal device and the network device, the terminal device cannot be directly connected to the network device. In this case, at least one relay device may be deployed between the terminal device and the network device, to form multi-hop communication, so that a wireless connection between the terminal device and the network device is implemented.

A physical form of the relay device may be a terminal device, a bridge, a network device (for example, a micro base station or an AP), an integrated access and backhaul IAB node (node), a customer premises equipment (customer premises equipment, CPE), a device having an integrated access and backhaul capability, or the like. This is not limited in this application.

(5) A response is sent by a receiving device based on a transmission status of a data packet, and is used to notify a sending device of the transmission status of the data packet, so that the sending device determines, based on the response, whether retransmission is required.

In a communications system supporting a hybrid automatic repeat request (Hybrid Automatic Repeat reQuest, HARQ) technology, after receiving a data packet, the receiving device sends a hybrid automatic repeat request acknowledgment (HARQ-acknowledgment, HARQ-ACK) to the sending device, to notify the sending device of a status of transmitting the data packet by the receiving device, so that the sending device determines, based on the transmission status of the TB, whether the data packet needs to be retransmitted. For example, in a communications system performing transmission based on a transport block (transport block, TB), a data packet includes a TB.

Generally, the HARQ-ACK includes an acknowledgment (Acknowledgement, ACK) and a negative acknowledgment (Negative Acknowledgement, NACK). The ACK indicates that a data packet is successfully transmitted, and the NACK indicates that a data packet is unsuccessfully transmitted. In the embodiments of this application, "response" and "HARQ-ACK" may be interchanged except for a special case.

For example, when the network device sends a downlink PDSCH to the terminal device, the terminal device feeds back an ACK or a NACK for the PDSCH. For another example, when the terminal device sends uplink data to the network device, the network device feeds back an ACK or a NACK for the uplink data by using signaling, or the terminal device may determine whether a new data indicator (NDI) in uplink scheduling signaling for scheduling a same HARQ process next time is toggled. If the NDI is toggled, it is equivalent to an ACK, or if the NDI is not toggled, it is equivalent to a NACK.

In some scenarios, the receiving device sends an ACK only when a data packet is successfully transmitted. When receiving an ACK, the sending device determines that a data packet is successfully transmitted; or when receiving no ACK, the sending device determines that a data packet is unsuccessfully transmitted and needs to be retransmitted.

In conclusion, in this application, the HARQ-ACK includes three states: an ACK, a NACK, and a third state other than the ACK and the NACK. The third state may be referred to as discontinuous transmission (Discontinuous Transmission, DTX), and the third state may be essentially a response other than the ACK or the NACK, and is also referred to as "any". In some embodiments, that the receiving device does not detect a valid response (an ACK and a NACK) also means that DTX is received.

(6) "And/or" describes an association relationship between associated objects and indicates that three relationships may exist. For example, A and/or B may represent the following three cases: Only A exists, both A and B exist, and only B exists. The character "/" usually represents an "or" relationship between the associated objects.

It should be noted that "a plurality of" in this application means two or more than two, and "at least one" means one or more.

In addition, it should be understood that, in the description of this application, terms such as "first" and "second" are merely used for distinguishing and description, but cannot be understood as indicating or implying relative importance, or indicating or implying an order.

The following describes the embodiments of this application in detail with reference to the accompanying drawings.

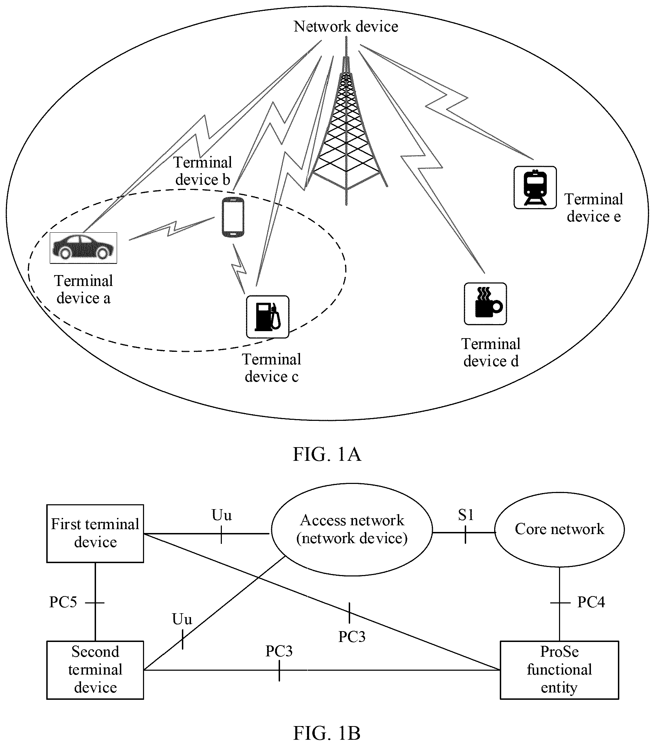

FIG. 1A shows an architecture of a possible communications system to which the contention window method provided in the embodiments of this application is applicable. Refer to FIG. 1A. The communications system includes a network device and terminal devices (a terminal device a to a terminal device e in FIG. 1A).

The network device is an entity that can receive and transmit a wireless signal on a network side, and is responsible for providing a radio access-related service for a terminal device in a cell managed by the network device, and implementing a physical layer function, a resource scheduling function, a radio resource management function, a quality of service (Quality of Service, QoS) management function, a radio access control function, and a mobility management function.

The terminal device is an entity that can receive and transmit a wireless signal on a user side, and needs to access a network by using the network device.

Optionally, the communications system shown in FIG. 1A supports a sidelink (sidelink) communications technology. The sidelink communications technology is a near field communication technology in which terminal devices can be directly connected, and is also referred to as a proximity service (proximity services, ProSe) communications technology or a device to device (device to device, D2D) communications technology. In the communications system, a plurality of terminal devices that are located in relatively close geographical locations and that support sidelink communication may form one communications sub-system. In the communications sub-system, sidelink communication may be performed between terminal devices.

For example, in the communications system shown in FIG. 1A, the terminal device a, the terminal device b, and the terminal device c all support sidelink communication. In this case, the three terminal devices may form a communications subsystem, and sidelink data can be transmitted between the terminal device a and the terminal device b and between the terminal device b and the terminal device c.

Based on the architecture of the communications system shown in FIG. 1A, as shown in FIG. 1B, an embodiment of this application further provides a network topology architecture of a communications system. A network device and a terminal device may be connected through an air interface (namely, a Uu interface), to implement communication (such communication may be briefly referred to as Uu communication or cellular network communication) between the terminal device and the network device. A direct link may be established between adjacent terminal devices through a PC5 interface to transmit sidelink data.

An unlicensed spectrum resource may be used for data transmission in the communications systems shown in FIG. 1A and FIG. 1B, to increase a capacity of the communications system and reduce pressure of a shortage of a licensed spectrum resource. For example, when communicating with each other by using the Uu interface, the network device and the terminal device may transmit data by using the unlicensed spectrum resource. For another example, when communicating with each other by using the PC5 interface, terminal devices may transmit data by using the unlicensed spectrum resource.

It should be further noted that the communications systems shown in FIG. 1A and FIG. 1B are used as examples, and constitute no limitation on a communications system to which the method provided in the embodiments of this application is applicable. The embodiments of this application may be further applied to communications systems of various types and standards, for example, a 5th generation (The 5th Generation, 5G) communications system, a future (6th generation, 7th generation, or the like) communications system, a long term evolution (Long Term Evolution, LTE) communications system, a vehicle to everything (vehicle to everything, V2X) communications system, a long term evolution-vehicle (LTE-vehicle, LTE-V) communications system, a vehicle to vehicle (vehicle to vehicle, V2V) communications system, a machine type communication (Machine Type Communications, MTC) system, an internet of things (internet of things, IoT) communications system, a long term evolution-machine to machine (LTE-machine to machine, LTE-M) communications system, a machine to machine (machine to machine, M2M) communications system, a D2D communications system, and an enterprise LTE discrete spectrum aggregation (enterprise LTE discrete spectrum aggregation, eLTE-DSA) system. This is not limited in the embodiments of this application.

In the foregoing communications systems deployed on an unlicensed spectrum that are shown in FIG. 1A and FIG. 1B, a communications device (the network device or the terminal device) usually uses an LBT mechanism to fairly contend for and use the unlicensed spectrum resource. For a main procedure of the LBT mechanism, refer to the description in the background. Details are not described herein again.

Currently, to reduce a probability that a data transmission collision occurs on a communications device in a communications system, a process of updating a contention window CW by a network device eNB in an LTE-LAA communications system is defined in 3GPP TS37.213. The LTE-LAA communications system sets different priorities (for example, sets priorities 1, 2, 3, and 4) for contention window values, and sets a corresponding minimum contention window value CWmin,p and maximum contention window value CWmax,p for each priority p, where p∈{1, 2, 3, 4}.

When the eNB expects to transmit a PDSCH on one carrier at a priority p, the eNB may adjust a contention window value CWp according to the following steps.
1. First, the eNB sets CWp=CWmin,p.
2. The eNB defines a start subframe in most recent transmission on the current carrier as a reference subframe, where the eNB sends a plurality of reference PDSCHs in the reference subframe. The eNB adjusts CWp of next LBT based on a received response of the PDSCH in the reference subframe:

If a proportion of PDSCHs for which the eNB receives a NACK exceeds a failure threshold (for example, 80%) or a proportion of PDSCHs for which the eNB receives an ACK is less than a success threshold (for example, 20%), the eNB increases CWp, for example, CWp=(CWp+1)^{∗}m-1, where m≥2.It should be noted that increased CWp needs to meet a constraint: CWp≤CWmax,p. Responses such as a NACK, DTX, and any that are received by the eNB are all counted as NACKs.

In another case, the eNB sets CWp=CWmin,p.

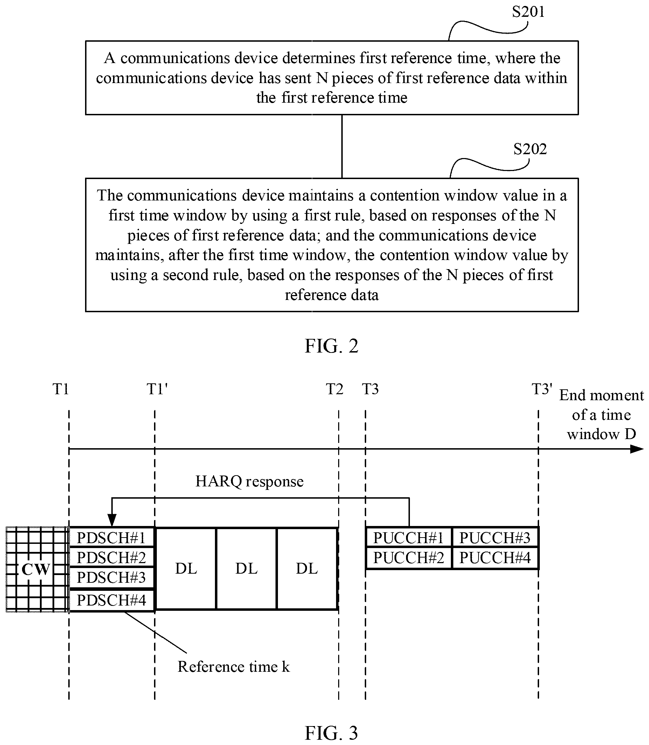

To reduce, while ensuring channel access fairness, a channel access delay and a probability of a data transmission collision that occurs because different communications devices select a same contention window, this application provides a contention window maintenance method. The method may be applied to the communications systems shown in FIG. 1A and FIG. 1B. A communications device involved in the method may be a network device or a terminal device that is in the communications system, that supports use of an unlicensed spectrum, and that uses an LBT mechanism for channel contention. Refer to FIG. 2. The method specifically includes the following procedure.

S201: The communications device determines first reference time, where the communications device has sent N pieces of first reference data within the first reference time, and N is an integer greater than 0.

In the communications system, the communications device may send data to a receive end through a plurality of data transmission processes. Therefore, when determining the first reference time, the communications device may determine the first reference time in an L^{th} data transmission process. For example, the communications device may use a specified time period in the L^{th} data transmission process as the first reference time, or the communications device may use a part of a time period in the L^{th} data transmission process as the first reference time. For example, when the communications device sends a radio frame to perform the data transmission process, the communications device may use the first a slots in the radio frame for performing the L^{th} data transmission process as the first reference time, where L and a are integers greater than 0.

It should be noted that the first reference data may be a data packet transmitted within the first reference time. For example, in a scenario in which a network device transmits downlink data to a terminal device, the network device is the communications device, and the first reference data may be a physical downlink shared channel (physical downlink shared channel, PDSCH). In a scenario in which a terminal device transmits uplink data to a network device, the terminal device is the communications device, and the first reference data may be a physical uplink shared channel (physical uplink shared channel, PUSCH).

S202: The communications device maintains a contention window value in a first time window by using a first rule, based on responses of the N pieces of first reference data; and the communications device maintains, after the first time window, the contention window value by using a second rule, based on the responses of the N pieces of first reference data. In different implementations, the first rule and the second rule may be the same or different.

It should be noted that, for channel access contention, the communications device stores the contention window value or the contention window value is specified in a protocol. In this way, when the communications device performs an LBT contention process before a data transmission process, the communications device can select a random contention count from an interval including contention window values.

In different implementations, when the communications device performs S202, in the first time window, the communications device may be triggered, on the following occasions, for example, to maintain the contention window value by using the first rule.

Occasion 1: When receiving a response of at least one piece of first reference data in the first time window, the communications device maintains the contention window value by using the first rule based on the responses of the N pieces of first reference data. In other words, receiving the response of the first reference data triggers the communications device to maintain the contention window value.

Occasion 2: Before the communications device performs the data transmission process when the communications device determines, based on a time domain resource configuration of a data transmission process, that the data transmission process needs to be enabled in the first time window, the communications device maintains the contention window value by using the first rule based on the responses of the N pieces of first reference data. In other words, the data transmission process to be performed in the first time window triggers the communications device to maintain the contention window value.

Specifically, on the foregoing trigger occasions, the communications device may maintain, by using the following implementations, for example, the contention window value by using the first rule based on the responses of the N pieces of first reference data.

### Implementation 1

The communications device increases the contention window value based on a current contention window value when a proportion (Num(ACK)/N) of first target reference data in the N pieces of first reference data does not exceed a first threshold or a proportion (Num(NACK)+Num(DTX)/N) of second target reference data in the N pieces of first reference data exceeds a second threshold; or
the communications device adjusts the contention window value to a minimum contention window value when the proportion (Num(ACK)/N) of the first target reference data in the N pieces of first reference data exceeds the first threshold or the proportion (Num(NACK)+Num(DTX)/N) of the second target reference data in the N pieces of first reference data does not exceed the second threshold.

The first target reference data is first reference data for which the communications device receives a success response ACK, and a number of pieces of first target reference data is represented by Num(ACK). The second target reference data is first reference data for which the communications device does not receive an ACK, in other words, the second target reference data is first reference data for which the communications device receives a NACK and DTX, and a number of pieces of second target reference data is represented by Num(NACK)+Num(DTX).

Optionally, in this implementation, a sum of the first threshold and the second threshold is equal to 1.

It should be noted that specific values of the first threshold and the second threshold are not limited in this embodiment of this application.

Because the contention window value is maintained in the first time window, a relatively large number of responses are not received by the communications device due to an LBT failure of the receive end or another case. In this case, when the communications device does not receive ACKs of some first reference data, the communications device may incorrectly count the first reference data as unsuccessfully transmitted first reference data, and incorrectly adjust and increase the contention window value when the contention window value originally needs to be adjusted to the minimum contention window value. This increases a channel access delay of the communications device and finally affects channel access fairness of the communications device.

In an example of this implementation, to resolve the foregoing problem, the second threshold (for example, 90%) is set to be greater than a failure threshold (for example, 80%) in a conventional maintenance method. In this way, in the method, a condition for increasing the contention window value can be more stringent, so that a probability that the communications device increases the contention window value due to an LBT failure of the receive end or another case is reduced, thereby ensuring a channel access speed of the communications device and finally ensuring channel access fairness of the communications device.

### Implementation 2

The communications device adjusts the contention window value to a minimum contention window value when a proportion (Num(ACK)/N) of first target reference data in the N pieces of first reference data exceeds a third threshold; or
the communications device increases the contention window value based on a current contention window value when a proportion (Num(NACK)/N) of third target reference data in the N pieces of first reference data exceeds a fourth threshold; or
the communications device does not adjust the contention window value when the proportion (Num(ACK)/N) of the first target reference data in the N pieces of first reference data does not exceed the third threshold and the proportion (Num(NACK)/N) of the third target reference data in the N pieces of first reference data does not exceed the fourth threshold.

The first target reference data is first reference data for which the communications device receives an ACK, and a number of pieces of first target reference data is represented by Num(ACK). The third target reference data is first reference data for which the communications device receives a NACK, and a number of pieces of third target reference data is represented by Num(NACK).

Optionally, in this implementation, a sum of the third threshold and the fourth threshold is equal to 1.

It should be noted that specific values of the third threshold and the fourth threshold are not limited in this embodiment of this application.

Because the contention window value is maintained in the first time window, a relatively large number of responses are not received by the communications device due to a delay or an LBT failure of the receive end. In this case, the response that is not received by the communications device may be an ACK, or may be a NACK. In this implementation, when maintaining the contention window value, the communications device considers only first reference data for which an ACK and a NACK are received, and does not collect statistics about first reference data for which DTX is received. In this way, the following case can be avoided: Because an ACK of the first reference data is not received due to a delay, first reference data is incorrectly counted as unsuccessfully transmitted first reference data. Because a number of pieces of first reference data for which a NACK is received is less than or equal to a number of pieces of first reference data for which an ACK is not received, even if the fourth threshold is the same as or close to a failure threshold (for example, 80%) in the conventional technology, a condition for increasing the contention window value can be more stringent, thereby reducing a probability of increasing the contention window value, ensuring a channel access speed of the communications device, and finally ensuring channel access fairness of the communications device.

Further, because the fourth threshold is the same as or close to the failure threshold (for example, 80%) in the conventional technology, the third threshold is the same as or close to a success threshold (for example, 20%) in the conventional technology. Therefore, in this implementation, it can be ensured that a condition for adjusting the contention window value to the minimum value is not loosened, so that a probability of adjusting the contention window value to the minimum value is not increased, thereby further reducing a probability of a data transmission collision that occurs because the communications device decreases the contention window value.

In addition, in this implementation, when the responses of the N pieces of first reference data meet neither the condition for increasing the contention window value nor a condition for decreasing contention window data, the communications device may keep the contention window value unchanged. In this way, a channel access speed of the communications device can be ensured, and a probability of a data transmission collision that occurs because the communications device decreases the contention window value can also be reduced.

### Implementation 3

The communications device does not adjust the contention window value when a proportion ((Num(ACK)+Num(NACK))/N) of fourth target reference data in the N pieces of first reference data does not exceed a fifth threshold; or
the communications device adjusts, by performing the following step, the contention window value when the proportion ((Num(ACK)+Num(NACK))/N) of the fourth target reference data in the N pieces of first reference data exceeds the fifth threshold:
the communications device increases the contention window value based on a current contention window value when a proportion (Num(ACK)/(Num(ACK)+Num(NACK))) of first target reference data in the fourth target reference data does not exceed a sixth threshold or a proportion (Num(NACK)/(Num(ACK)+Num(NACK))) of third target reference data in the fourth target reference data exceeds a seventh threshold; or
the communications device adjusts the contention window value to a minimum contention window value when the proportion (Num(ACK)/(Num(ACK)+Num(NACK)) of the first target reference data in the fourth target reference data exceeds the sixth threshold or the proportion (Num(NACK)/(Num(ACK)+Num(NACK))) of the third target reference data in the fourth target reference data does not exceed the seventh threshold.

The fourth target reference data is first reference data for which the communications device receives an ACK and first reference data for which the communications device receives a NACK, and a number of pieces of fourth target reference data is represented by Num(ACK)+Num(NACK). The first target reference data is the first reference data for which the communications device receives an ACK, and a number of pieces of first target reference data is represented by Num(ACK). The third target reference data is the first reference data for which the communications device receives a NACK, and a number of pieces of third target reference data is represented by Num(NACK).

Optionally, in this implementation, a sum of the sixth threshold and the seventh threshold is equal to 1.

It should be noted that specific values of the sixth threshold and the seventh threshold are not limited in this embodiment of this application. For example, the sixth threshold may be set to 10%, and the first threshold may be set to 90%.

It can be learned from the description in the foregoing implementation that, because the contention window value is maintained in the first time window, a relatively large number of responses are not received by the communications device due to a delay or an LBT failure of the receive end. When there are a relatively small number of pieces of first reference data (namely, the fourth target reference data) for which the communications device receives a response, a proportion, in the N pieces of first reference data, of first reference data for which an ACK is received is relatively small, and the communications device adjusts the contention window value, so that a channel access delay of the communications device is reduced, and channel access fairness of the communications device is finally ensured.

To resolve the foregoing problem, the communications device determines, based on the following two proportions that can better reflect an actual ACK and NACK distribution status, whether to increase the contention window value or to adjust the contention window value to the minimum contention window value, so that accuracy of the determined contention window value can be improved: a proportion, in the first reference data for which an ACK and a NACK are received, of the first reference data for which an ACK is received and a proportion, in the first reference data for which an ACK and a NACK are received, of the first reference data for which a NACK is received. Therefore, in this implementation, a channel access speed of the communications device can be ensured, and a probability of a data transmission collision that occurs because the communications device decreases the contention window value can also be reduced.

In addition, when there are a very small number of pieces of first reference data (namely, the fourth target reference data) for which the communications device receives a response, the actual ACK and NACK distribution status cannot be accurately reflected even if the foregoing two proportions are used. To ensure a channel access speed of the communications device and also reduce a probability of a data transmission collision that occurs because the communications device decreases the contention window value, the communications device may keep the contention window value unchanged in this case.

It should be noted that a specific value of the fifth threshold is not limited in this embodiment of this application. Optionally, the fifth threshold may be set to a relatively small value such as 0% or 1%.

### Implementation 4

The communications device increases the contention window value based on a current contention window value when a proportion ((Num(ACK)+Num(NACK))/N) of fourth target reference data in the N pieces of first reference data does not exceed an eighth threshold or a proportion (Num(DTX)/N) of fifth target reference data in the N pieces of first reference data exceeds a ninth threshold; or
the communications device adjusts the contention window value to a minimum contention window value when the proportion ((Num(ACK)+Num(NACK))/N) of the fourth target reference data in the N pieces of first reference data exceeds the eighth threshold or the proportion (Num(DTX)/N) of the fifth target reference data in the N pieces of first reference data does not exceed the ninth threshold.

The fourth target reference data is first reference data for which the communications device receives an ACK and first reference data for which the communications device receives a NACK, and a number of pieces of fourth target reference data is represented by Num(ACK)+Num(NACK). The fifth target reference data is first reference data for which the communications device does not receive an ACK or a NACK in the N pieces of first reference data, in other words, the fifth target reference data is first reference data for which DTX is detected, and a number of pieces of fifth target reference data is represented by Num(DTX).

Optionally, in this implementation, a sum of the eighth threshold and the ninth threshold is equal to 1.

It should be noted that specific values of the eighth threshold and the ninth threshold are not limited in this embodiment of this application. For example, the eighth threshold may be set to 10%, and the ninth threshold may be set to 90%.

It can be learned from the description in the foregoing implementation that, because the contention window value is maintained in the first time window, a relatively large number of responses are not received by the communications device due to an LBT failure of the receive end or another case. The communications device may not receive a response due to a data transmission collision. Therefore, when there are a relatively small number of pieces of first reference data for which the communications device receives a response (an ACK and a NACK), it indicates that there are a relatively large number of pieces of first reference data for which a valid response is not received (or DTX is received), and a probability of a data transmission collision is relatively large. Therefore, the communications device may increase the contention window value to reduce a probability of a transmission collision occurring in a subsequent data transmission process.

Correspondingly, when there are a relatively large number of pieces of first reference data for which the communications device receives a response (an ACK and a NACK), it indicates that there are a relatively small number of pieces of first reference data for which a response is not received (or DTX is received), and a probability of a data transmission collision is relatively small. Therefore, the communications device may adjust the contention window value to the minimum contention window value. In this way, a channel access speed of the communications device can be improved.

In some implementations, when the communications device performs S202, after the first time window, the communications device may be triggered, on the following occasions, to maintain the contention window value by using the second rule.

Occasion 1: When the first time window ends, the communications device maintains the contention window value by using the second rule based on the responses of the N pieces of first reference data. In other words, the end of the first time window triggers the communications device to maintain the contention window value.

Occasion 2: When receiving a response of at least one piece of first reference data after the first time window ends, the communications device maintains the contention window value by using the second rule based on the responses of the N pieces of first reference data. In other words, receiving the response of the first reference data triggers the communications device to maintain the contention window value.

Occasion 3: Before performing a data transmission process after the first time window ends, the communications device maintains the contention window value by using the second rule based on the responses of the N pieces of first reference data. In other words, the data transmission process to be performed outside the first time window triggers the communications device to maintain the contention window value.

It should be noted that when the communications device is not triggered, in the first time window, to maintain the contention window value by using the first rule, the communications device may be triggered, on Occasion 3, to maintain the contention window value by using the second rule. When the communications device is triggered, in the first time window, to maintain the contention window value by using the first rule, the communications device directly performs a data transmission process by using the contention window value without maintaining the contention window value by using the second rule.

Specifically, on the foregoing trigger occasions, the communications device may maintain, by using the following implementations, for example, the contention window value by using the second rule based on the responses of the N pieces of first reference data.

### Implementation 1

The communications device increases the contention window value based on the current contention window value when the proportion (Num(ACK)/N) of the first target reference data in the N pieces of first reference data does not exceed a tenth threshold or the proportion ((Num(NACK)+Num(DTX))/N) of the second target reference data in the N pieces of first reference data exceeds an eleventh threshold; or
the communications device adjusts the contention window value to the minimum contention window value when the proportion (Num(ACK)/N) of the first target reference data in the N pieces of first reference data exceeds the tenth threshold or the proportion ((Num(NACK)+Num(DTX))/N) of the second target reference data in the N pieces of first reference data does not exceed the eleventh threshold.

The first target reference data is the first reference data for which the communications device receives an ACK, and the number of pieces of first target reference data is represented by Num(ACK). The second target reference data is the first reference data for which the communications device does not receive an ACK, and the number of pieces of second target reference data is represented by Num(NACK)+Num(DTX).

Optionally, in this implementation, a sum of the tenth threshold and the eleventh threshold is equal to 1.

It should be noted that specific values of the tenth threshold and the eleventh threshold are not limited in this embodiment of this application.

Because the contention window value is maintained after the first time window ends, a relatively small number of responses are not received by the communications device due to an LBT failure of the receive end or another case. Therefore, after the first time window ends, the communications device may maintain the contention window value by using a transmission method. Because a proportion, in the N pieces of first reference data, of the first reference data for which an ACK is received and a proportion, in the N pieces of first reference data, of the first reference data for which an ACK is not received can reflect an actual response state distribution status, accuracy of the determined contention window value can be improved by using the foregoing implementation. Therefore, in this implementation, a channel access speed of the communications device can be ensured, and a probability of a data transmission collision that occurs because the communications device decreases the contention window value can also be reduced.

Optionally, the tenth threshold may be the same as or close to the success threshold in the conventional technology. Correspondingly, the eleventh threshold may be the same as or close to the failure threshold in the conventional technology. For example, the tenth threshold may be set to 20%, and the eleventh threshold may be set to 80%.

### Implementation 2

The communications device increases the contention window value based on the current contention window value when the proportion ((Num(ACK)+Num(NACK))/N) of the fourth target reference data in the N pieces of first reference data does not exceed a twelfth threshold or the proportion (Num(DTX)/N) of the fifth target reference data in the N pieces of first reference data exceeds a thirteenth threshold; or
the communications device adjusts the contention window value to the minimum contention window value when the proportion ((Num(ACK)+Num(NACK))/N) of the fourth target reference data in the N pieces of first reference data exceeds the twelfth threshold or the proportion (Num(DTX)/N) of the fifth target reference data in the N pieces of first reference data does not exceed the thirteenth threshold.

The fourth target reference data is the first reference data for which the communications device receives an ACK and the first reference data for which the communications device receives a NACK, and the number of pieces of fourth target reference data is represented by Num(ACK)+Num(NACK). The fifth target reference data is the first reference data for which the communications device does not receive an ACK or a NACK in the N pieces of first reference data, and the number of pieces of fifth target reference data is represented by Num(DTX).

Optionally, in this implementation, a sum of the twelfth threshold and the thirteenth threshold is equal to 1.

It should be noted that specific values of the twelfth threshold and the thirteenth threshold are not limited in this embodiment of this application. For example, the twelfth threshold may be set to 20%, and the third threshold may be set to 80%.

The communications device may not receive a response due to a data transmission collision. Therefore, when there are a relatively small number of pieces of first reference data for which the communications device receives a response (an ACK and a NACK), it indicates that there are a relatively large number of pieces of first reference data for which a response is not received (or DTX is received), and a probability of a data transmission collision is relatively large. Therefore, the communications device may increase the contention window value to reduce a probability of a transmission collision occurring in a subsequent data transmission process.

Correspondingly, when there are a relatively large number of pieces of first reference data for which the communications device receives a response (an ACK and a NACK), it indicates that there are a relatively small number of pieces of first reference data for which a response is not received (or DTX is received), and a probability of a data transmission collision is relatively small. Therefore, the communications device may adjust the contention window value to the minimum contention window value. In this way, a channel access speed of the communications device can be improved.

It should be noted that the communications system may support one or more times of response feedback. When the communications system supports a plurality of times of response feedback, the communications device may receive responses of some first reference data a plurality of times before maintaining the contention window value. In any one of the foregoing implementations, when maintaining the contention window value by using the first rule or the second rule, the communications device uses a last received response of the first reference data as a final response of the first reference data, and then maintains the contention window value based on final responses of the N pieces of first reference data.

In addition, this embodiment of this application further provides a method for determining the first time window by the communications device.

In an implementation, the communications device may determine a start moment of the first time window in the following manner:

The start moment of the first time window precedes or follows the first reference time, where when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, where the target time domain resource is a preset earliest time domain resource used for transmitting the responses of the N pieces of first reference data.

In another implementation, the communications device may determine a size of the first time window in the following manner:

The size of the first time window may be preset (for example, specified in a standard), be agreed upon between the communications device and the receive end, be configured by the communications device for the receive end, or be equal to maximum duration for which the receive end waits for the communications device to schedule a response resource, or other existing duration of the communications device is reused as the first time window. This is not limited in this application.

In addition, the first time window is maintained by using a timer (timer). For example, at the start moment of the first time window, the communications device starts a first time window timer, and initializes the first time window timer to 0 or D. Then, as time elapses, a count in the first time window timer is incremented or decremented. When the count in the first time window timer is D or 0, the first time window ends. D is greater than 0, and D is in a unit of second, millisecond, subframe, slot, or the like. This is not limited in this application.

In an implementation of this embodiment of this application, the communications device may repeat the foregoing steps to continuously update the contention window value, to adapt to a changing data transmission environment.

The communications device may determine, a plurality of times, reference time and a time window corresponding to the reference time (for example, the first time window corresponds to the first reference time), to maintain the contention window value by using the first rule or the second rule. For a method for maintaining the contention window value each time, refer to the foregoing description in steps S201 and S202. After the communications device currently determines reference time, when the communications device receives a response of reference data sent within reference time a previous time, the communications device needs to back off to the time to re-maintain a contention window value and sequentially re-maintain contention windows maintained after the time, until a contention window maintained a current time is re-maintained.

For example, when a to-be-performed data transmission process triggers the communications device to maintain the contention window value, a cyclic maintenance process is as follows:

After the communications device performs S201 and S202, the communications device determines K^{th} reference time, where the second reference time is located in an (L+K)^{th} data transmission process, the communications device has sent M pieces of second reference data within the K^{th} reference time, M is an integer greater than 0, and K is an integer greater than 1;
if the communications device does not receive a response of at least one piece of (K-Y)^{th} reference data after the K^{th} reference time, the communications device continues, by performing step S202, to maintain the contention window value by using the first rule or the second rule; or
the communications device receives a response of at least one piece of (K-Y)^{th} reference data after the K^{th} reference time, where the (K-Y)^{th} reference data is reference data that has been sent within (K-Y)^{th} reference time, the (K-Y)^{th} reference time is located in an (L+K-Y)^{th} data transmission process, and Y is an integer greater than 0 and less than K;
the communications device redetermines, based on a contention window actually used in the (L+K-Y)^{th} data transmission process and a last received response of each piece of (K-Y)^{th} reference data, a contention window value that needs to be used in an (L+K-Y+1)^{th} data transmission process;
the communications device determines, based on a contention window value that needs to be used in a previous data transmission process and a last received response of reference data that has been sent within reference time in the previous data transmission process, a contention window value that needs to be used in a current data transmission process; and repeats the foregoing step until a contention window value that needs to be used in the (L+K)^{th} data transmission process is determined;
the communications device updates the current contention window value to the contention window value that needs to be used in the (L+K)^{th} data transmission process;
the communications device maintains, in a K^{th} time window corresponding to the K^{th} reference time, the contention window value by using the first rule based on responses of the M pieces of second reference data; and
after the K^{th} time window corresponding to the K^{th} reference time ends, the communications device maintains the contention window value by using the second rule based on the responses of the M pieces of second reference data.

In the foregoing steps, when receiving a response of reference data for maintaining a contention window value a previous time, the communications device backs off, based on the most recently received response of the reference data, to the time to re-maintain the contention window value, and sequentially re-maintains subsequent contention window values until a current contention window value is determined. Because an error exists in a previously used response of reference data, an error may exist in a contention window value determined the previous time, and errors are accumulated through a plurality of times of subsequent maintenance, affecting accuracy of the contention window value. Therefore, in the method, a previously determined contention window value may be corrected based on a latest response of reference data, and subsequently determined contention window values may be sequentially corrected, so that error accumulation of the contention window value is avoided, thereby improving accuracy of a finally determined contention window value.

For example, when the communications device uses a contention window of a priority p, in this embodiment of this application, the communications device may increase the contention window value based on a current contention window value by using the following methods, for example.

Method 1: The communications device multiplies the current contention window value according to a conventional method. For a specific process, refer to a formula: CWp=(CW+1)^{∗}m-1, where m≥2.

Method 2: The communications device presets a plurality of levels within a range of a minimum contention window value CWmin,p and a maximum contention window value CWmax,p, for example, CW1,p (namely, CWmin,p), CW2,p, CW2,p, ..., and CWf,p (namely, CWmax,p). When increasing the contention window value based on the current contention window value CWp, the communications device may determine a level of the current contention window value, and then adjust the contention window value to a next higher level of the level. For example, when the current contention window value CWp is CWi,p, the communications device may adjust the contention window value CWp to CWi+1,p.

Method 3: The network device increases the current contention window value by a fixed value.

This embodiment of this application provides a contention window maintenance method. In the method, a communications device may maintain a contention window value in a time window by using a first rule. The communications device sets specific buffer time (namely, time window) for receiving a response. Within the buffer time, the communications device maintains the contention window value by using the first rule different from that in the conventional technology, so that flexibility of maintaining the contention window value by the communications device and accuracy of determining the contention window value by the communications device can be improved. In addition, after the buffer time ends, accuracy of determining the contention window value when the communications device maintains the contention window value by using a second rule is improved. In conclusion, the method can improve accuracy of determining the contention window value by the communications device. Therefore, while ensuring channel access fairness, the method can reduce a channel access delay of the communications device and a probability of a data transmission collision that occurs because different communications devices select a same contention window.

Based on the foregoing embodiments, this application further provides contention window maintenance instances, as shown in figures. For ease of description, in the following instances, a contention window maintenance method is described by using the following scenario as an example: A network device serves as a transmit end, and a terminal device is a receive end. In a downlink data transmission process, the network device may transmit data by using a physical downlink shared channel (physical downlink shared channel, PDSCH), and the terminal device may feed back a response of each PDSCH to the network device by using a physical uplink control channel (physical uplink control channel, PUCCH). It should be noted that the following instances do not constitute a limitation on the contention window maintenance method of this application. The following instances are described by using an example in which first reference time is reference time k and first reference data is a PDSCH sent within the reference time k.

Instance 1: This instance provides a method for determining, by the network device, a time window D corresponding to the reference time k.

As shown in FIG. 3, when the network device determines the reference time k in one downlink data transmission process (namely, one downlink burst), the network device may determine that a start moment of the time window D corresponding to the reference time k precedes the reference time k (as shown by T1 in the figure), follows the reference time k (as shown by T1' in the figure), follows the end of a downlink data transmission process including the reference time k (as shown by T2 in the figure), or precedes (as shown by T3 in the figure) or follows (as shown by T3' in the figure) an earliest time domain resource that is allocated to the terminal device and that is used to feed back a response of the PDSCH within the feedback time k.

In addition, a size of the time window D of the reference time k may be agreed upon in advance (that is, preset) in a standard, or may be configured by the network device for the terminal device by using radio resource control (radio resource control, RRC) signaling, or the network device reuses other existing duration as the size of the time window D of the reference time k. For example, when the size of the time window D is other existing duration, the size may be maximum duration for which the terminal device waits for the network device to schedule an additional response time domain resource.

It should be further noted that the network device may maintain the time window D in a plurality of manners. For example, the network device may maintain the time window D (for example, duration is T0) by using a timer (timer). For example, at the start moment of the time window D, the communications device starts the time window timer, and initializes the time window timer to 0 or T0. Then, as time elapses, a count in the time window timer is incremented or decremented. When the count in the time window timer is T0 or 0, the time window D ends.

### Instance 2

The network device determines the reference time k and a time window D corresponding to the reference time k. The network device has sent N PDSCHs within the reference time k, the reference time k is located in an x^{th} downlink data transmission process (for example, one burst), and N is an integer greater than 0. The network device transmits data by using a contention window value of a priority p.

The network device determines a start moment g of an (x+1)^{th} downlink data transmission process based on a resource configuration of the PDSCH.

When the start moment g of the (x+1)^{th} downlink data transmission process is in the time window D, the network device maintains a contention window value by using the following method (corresponding to Implementation 1 of using the first rule in the embodiment shown in FIG. 2):

The network device increases the contention window value based on the current contention window value CWp if a proportion, in the N PDSCHs, of PDSCHs for which the network device does not receive an ACK exceeds a first threshold or a proportion, in the N PDSCHs, of PDSCHs for which the network device receives an ACK does not exceed a second threshold.

In another case, the network device adjusts the contention window value CWp to a minimum contention window value CWmin,p.

Optionally, a sum of the first threshold and the second threshold is equal to 1.

In an implementation, the first threshold is greater than 80% in the conventional technology. For example, the first threshold may be set to 90%. Correspondingly, the second threshold is less than 20% in the conventional technology. For example, the second threshold may be set to 10%. In this way, in the method, a condition for increasing the contention window value can be more stringent, so that a probability that the network device increases the contention window value due to an LBT failure of the receive end or another case is reduced, thereby ensuring a channel access speed of the network device and finally ensuring channel access fairness of the network device.

When the start moment g of the (x+1)^{th} downlink data transmission follows the end of the time window D, the network device maintains a contention window value by using the following method (corresponding to Implementation 1 of using the second rule in the embodiment shown in FIG. 2):

The network device increases the contention window based on the current contention window CWp if a proportion, in the N PDSCHs, of PDSCHs for which the network device does not receive an ACK exceeds a third threshold or a proportion, in the N PDSCHs, of PDSCHs for which the network device receives an ACK does not exceed a fourth threshold.

In another case, the network device adjusts the contention window CWp to a minimum value CWmin,p.

Optionally, a sum of the third threshold and the fourth threshold is equal to 1.

In this instance, a relationship between the third threshold and the first threshold is not limited. For example, the first threshold is greater than the third threshold.

In an implementation, the third threshold may be the same as or close to a failure threshold 80% in a maintenance method in the conventional technology. Correspondingly, the fourth threshold may be the same as or close to a success threshold 20% in the conventional technology.

Because the network device may maintain the contention window after the time window D, the network device may use the time window as buffer time for receiving a response by the network device. Because a relatively small number of responses are not received by the network device due to a delay after the time window D, a probability of increasing a contention window value because a PDSCH for which DTX is received is counted as an unsuccessfully transmitted PDSCH is reduced. In the method, the following case does not occur: The contention window value cannot increase because the receive end does not feed back a NACK, and therefore channel access fairness of a communications system is affected.

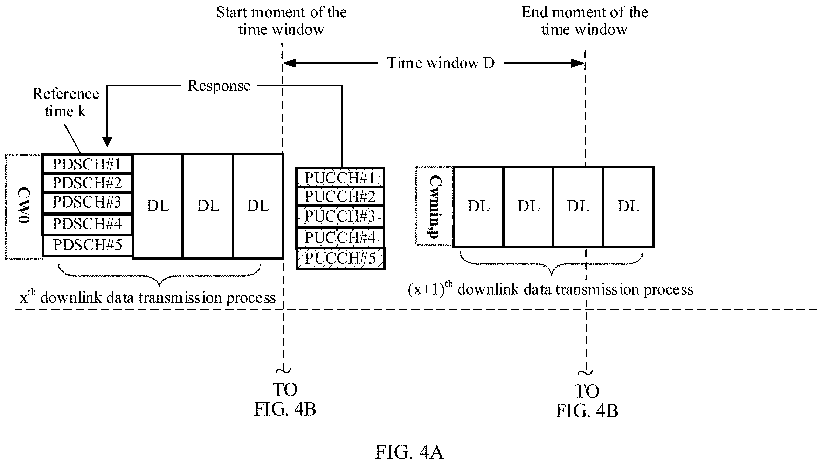

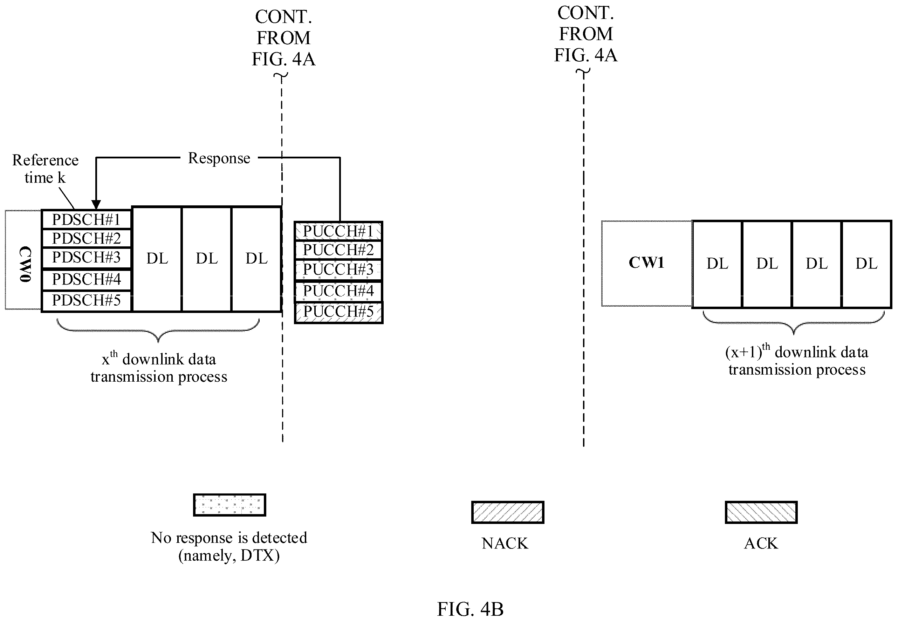

For example, the first threshold is 90%, the second threshold is 10%, the third threshold is 80%, and the fourth threshold is 20%. As shown in FIG. 4A and FIG. 4B, the network device determines the reference time k in the x^{th} downlink data transmission process, and then determines the time window D corresponding to the reference time k. To highlight a contrast, it is assumed that a response of PDSCH#1 is an ACK, responses of PDSCH#2 to PDSCH#4 are DTX, and a response of a PDSCH#5 is a NACK.

When the network device determines that the start moment g of the (x+1)^{th} downlink data transmission process is in the time window D, the network device maintains the contention window value based on the received responses of PDSCH#1 to PDSCH#5. Because a proportion, in the five PDSCHs, of PDSCHs for which an ACK is not received is 80% and does not reach preset 90%, and a proportion, in the five PDSCHs, of PDSCHs for which an ACK is received is 20% and exceeds preset 10%, the communications device adjusts the contention window value to the minimum contention window value CWmin,p.

When the network device determines that the start moment g of the (x+1)^{th} downlink data transmission process falls outside the time window D, the network device maintains the contention window value based on the received responses of PDSCH#1 to PDSCH#5. Because a proportion, in the five PDSCHs, of PDSCHs for which an ACK is not received is 80%, and reaches preset 80%, and a proportion, in the five PDSCHs, of PDSCHs for which an ACK is received is 20% and exceeds preset 00%, the communications device increases the contention window value based on a current contention window value CW0, in other words, adjusts the contention window value to CW1, where CW1>CWO.

Instance 3: A scenario is the same as that in Instance 2. Details are not described herein again.

The network device determines a start moment g of an (x+1)^{th} downlink data transmission process based on a resource configuration of the PDSCH.

When the start moment g of the (x+1)^{th} downlink data transmission process is in the time window D, the network device maintains a contention window value by using the following method (corresponding to Implementation 2 of using the first rule in the embodiment shown in FIG. 2):

The network device increases the contention window value based on the current contention window value CWp if a proportion, in the N PDSCHs, of PDSCHs for which the network device receives a NACK exceeds a first threshold.

The network device adjusts the contention window value CWp to a minimum contention window value CWmin,p if a proportion, in the N PDSCHs, of PDSCHs for which the network device receives an ACK exceeds a second threshold.

In another case, the network device does not adjust the contention window value CWp, in other words, keeps the current contention window value CWp unchanged.

Optionally, a sum of the first threshold and the second threshold is equal to 1.

In an implementation, the first threshold may be the same as or close to a failure threshold 80% in a maintenance method in the conventional technology. Correspondingly, the second threshold may be the same as or close to a success threshold 20% in the conventional technology.

When the start moment g of the (x+1)^{th} downlink data transmission follows the end of the time window D, the network device maintains the contention window by using the method in Instance 2. For a specific process, refer to Instance 2. Details are not described herein again.

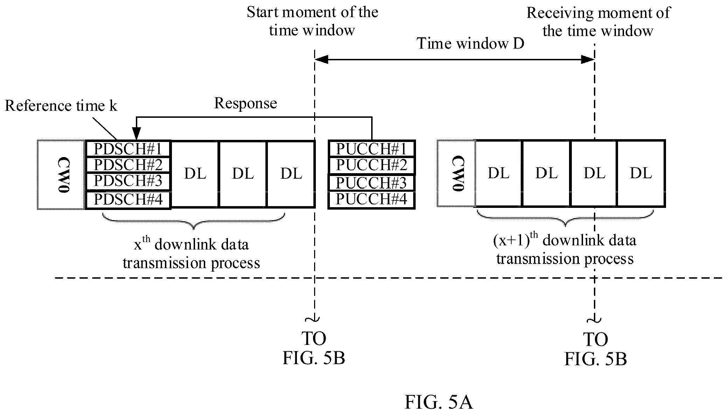

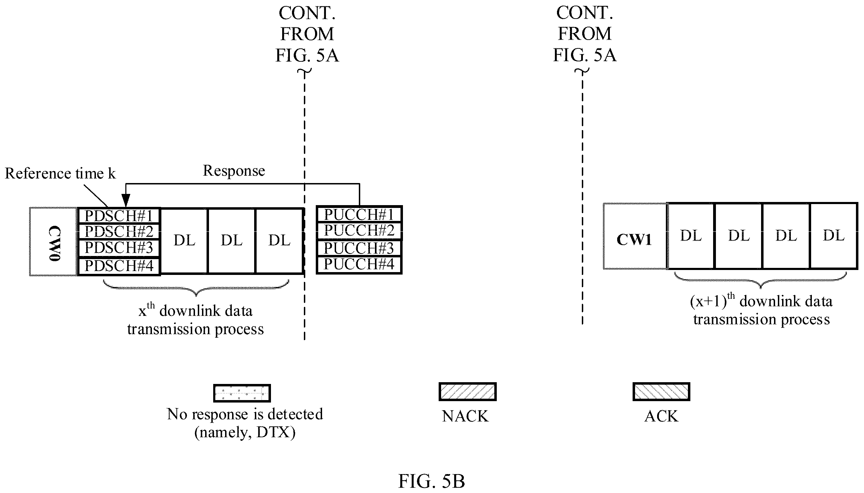

For example, the first threshold is 80%, the second threshold is 20%, the third threshold is 80%, and the fourth threshold is 20%. As shown in FIG. 5A and FIG. 5B, the network device determines the reference time k in the x^{th} downlink data transmission process, and then determines the time window D corresponding to the reference time k. To highlight a contrast, it is assumed that responses of PDSCH#2 and PDSCH#3 are DTX, and a response of PDSCH#4 is a NACK.

When the network device determines that the start moment g of the (x+1)^{th} downlink data transmission process is in the time window D, the network device maintains the contention window value based on the received responses of PDSCH#1 to PDSCH#4 sent within the reference time k. Because a proportion, in the four PDSCHs, of PDSCHs for which a NACK is received is 25% and does not exceed preset 80%, and a proportion, in the four PDSCHs, of PDSCHs for which an ACK is received is 0% and does not exceed preset 20%, the network device does not adjust the contention window value CW0, in other words, keeps the current contention window value CW0 unchanged.

When the network device determines that the start moment g of the (x+1)^{th} downlink data transmission process follows the end of the time window D, the network device maintains the contention window value based on the received responses of PDSCH#1 to PDSCH#4 sent within the reference time k. Because a proportion, in the four PDSCHs, of PDSCHs for which an ACK is not received is 100% and reaches preset 80%, the communications device increases the contention window value based on the current contention window value CW0, in other words, adjusts the contention window value to CW1, where CW1>CWO.

Instance 4: A scenario is the same as that in Instance 2. Details are not described herein again.

The network device determines a start moment g of an (x+1)^{th} downlink data transmission process based on a resource configuration of the PDSCH.

When the start moment g of the (x+1)^{th} downlink data transmission process is in the time window D, the network device maintains a contention window value by using the following method (corresponding to Implementation 3 of using the first rule in the embodiment shown in FIG. 2):

The network device increases the contention window value based on the current contention window value CWp if a proportion, in PDSCHs for which an ACK and a NACK are received, of PDSCHs for which a NACK is received exceeds a first threshold or a proportion, in the PDSCHs for which an ACK and a NACK are received, of PDSCHs for which an ACK is received does not exceed a second threshold.

If the network device receives an ACK or a NACK of none of the PDSCHs, the network device does not adjust the contention window value CWp, in other words, keeps the current contention window value CWp unchanged.

In another case, the network device adjusts the contention window value CWp to a minimum contention window value CWmin,p.

Optionally, a sum of the first threshold and the second threshold is equal to 1.

When the start moment g of the (x+1)^{th} downlink data transmission follows the end of the time window D, the network device maintains the contention window by using the method in Instance 2. For a specific process, refer to Instance 2. Details are not described herein again.

For example, the first threshold is 90%, the second threshold is 10%, the third threshold is 80%, and the fourth threshold is 20%.

FIG. 4A and FIG. 4B are still used as an example for description.

When the network device determines that the start moment g of the (x+1)^{th} downlink data transmission process is in the time window D, the network device maintains the contention window value based on received responses of PDSCH#1 to PDSCH#4 sent within the reference time k. The network device receives an ACK of PDSCH#1, and receives a NACK of PDSCH#5, in other words, the network device receives valid responses of two PDSCHs. Because a proportion, in the two PDSCHs, of PDSCHs for which an ACK is received is 50% and exceeds the second threshold, and a proportion, in the two PDSCHs, of PDSCHs for which a NACK is received is 50% and does not exceed the first threshold, the network device adjusts the contention window value CW0 to the minimum contention window value CWmin,p.

When the network device determines that the start moment g of the (x+1)^{th} downlink data transmission process falls outside the time window D, the network device maintains the contention window value based on received responses of PDSCH#1 to PDSCH#5 sent within the reference time k. The communications device increases the contention window value based on the current contention window value CW0, in other words, adjusts the contention window value to CW1, where CW1>CWO. For details, refer to Instance 2.

Instance 5: A scenario is the same as that in Instance 2. Details are not described herein again.

The network device determines a start moment g of an (x+1)^{th} downlink data transmission process based on a resource configuration of the PDSCH.

When the start moment g of the (x+1)^{th} downlink data transmission process is in the time window D, the network device maintains a contention window value by using the following method (corresponding to Implementation 4 of using the first rule in the embodiment shown in FIG. 2):

The network device increases the contention window value based on the current contention window value CWp if a proportion, in the N PDSCHs, of PDSCHs for which DTX is detected exceeds a first threshold or a proportion of PDSCHs for which an ACK and a NACK are received does not exceed a second threshold.

In another case, the network device adjusts the contention window value CWp to a minimum contention window value CWmin,p.

Optionally, a sum of the first threshold and the second threshold is equal to 1.

When the start moment g of the (x+1)^{th} downlink data transmission process follows the end of the time window D, the network device maintains the contention window value by using the following method (corresponding to Implementation 2 of using the second rule in the embodiment shown in FIG. 2):

The network device increases the contention window value based on the current contention window value CWp if the proportion, in the N PDSCHs, of the PDSCHs for which DTX is detected exceeds a third threshold or a proportion of the PDSCHs for which an ACK and a NACK are received does not exceed a fourth threshold.

In another case, the network device adjusts the contention window value CWp to the minimum contention window value CWmin,p.

Optionally, a sum of the third threshold and the fourth threshold is equal to 1.

It can be learned, from the description of the two methods for maintaining the contention window in the time window D and after the end of the time window D, that principles of the two methods are essentially the same. It should be further noted that a magnitude relationship between the first threshold and the third threshold is not limited in this instance, and the first threshold may be greater than, less than, or equal to the third threshold. Similarly, the second threshold may be greater than, less than, or equal to the fourth threshold.

Buffer time retained for a response is shorter when the contention window value is maintained in the time window D compared with maintaining the contention window value after the time window ends. Therefore, because a relatively large number of valid responses are not received by the communications device due to an LBT failure of the receive end or another case, to avoid a case in which the communications device cannot receive a response ACK or NACK due to a delay and consequently, a statistical error of the communications device is relatively large and the communications device increases the contention window value, in this instance, the first threshold may be set to be greater than the third threshold, for example, the first threshold is 90%, and the third threshold is 80%. In this way, when the communications device maintains the contention window in the time window D, a condition for increasing the contention window value can be more stringent, so that a probability of increasing the contention window value is reduced, thereby ensuring a channel access speed of the communications device and finally ensuring channel access fairness of the communications device.

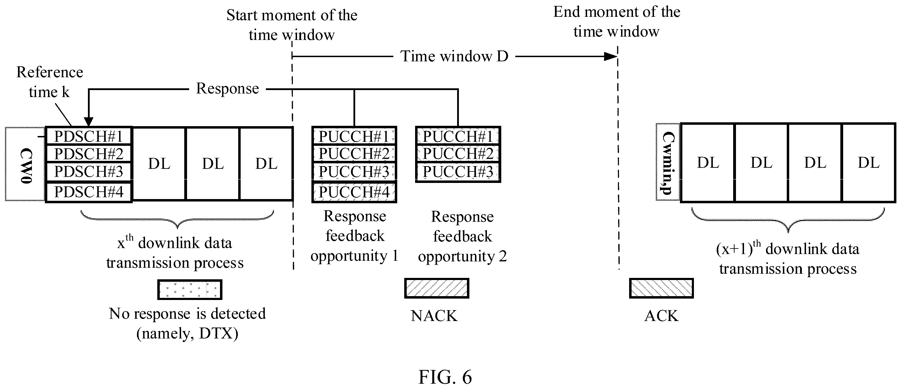

Instance 6: A scenario is the same as that in Instance 2. Details are not described herein again. In this instance, when a communications system supports a plurality of times of response feedback, the terminal device has a plurality of response feedback opportunities, for example, as shown in FIG. 6.

After sending PDSCH#1 to PDSCH#4 within the reference time, the network device has two response feedback receiving opportunities in the time window D. In a first response feedback opportunity, the network device does not receive responses of PUCCH#1 to PDSCH#3, and receives a NACK of PDSCH#4. In a second response feedback opportunity, the network device receives ACKs of PUCCH#1 and PDSCH#2, and does not receive a response of PDSCH#3.

When the network device determines that the start moment g of the (x+1)^{th} downlink data transmission process follows the end of the time window D, the network device maintains the contention window value based on last received responses of PDSCH#1 to PDSCH#4. For example, when the network device uses Implementation 1 of using the second rule in the embodiment shown in FIG. 2, because responses of PDSCH#1 and PDSCH#2 are ACKs, a response of PDSCH#3 is DTX, and a response of PDSCH#4 is a NACK, a proportion, in the four PDSCHs, of PDSCHs for which an ACK is not received is 50% and does not reach preset 80%, and therefore the communications device adjusts a contention window value to a minimum contention window value CWmin,p.

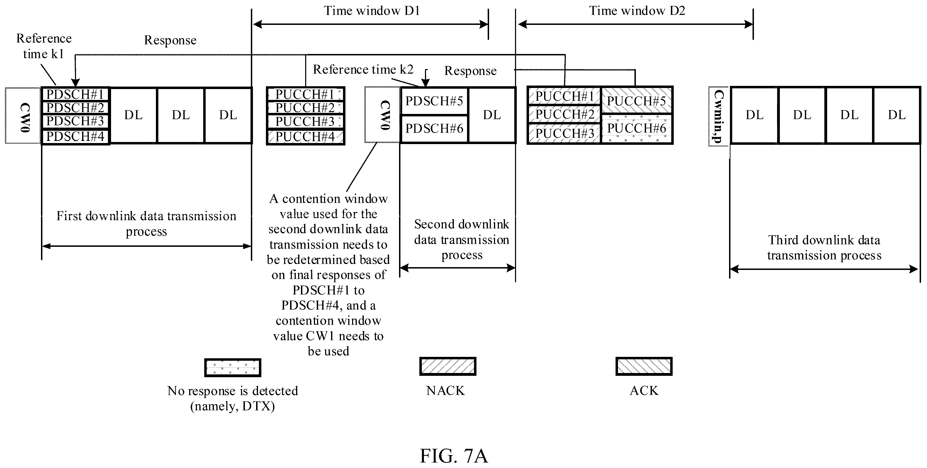

Instance 7: A scenario is the same as that in Instance 2. Details are not described herein again. In this instance, the network device may be triggered by a to-be-performed data transmission process to continuously maintain a contention window value, for example, as shown in FIG. 7A to FIG. 7C.

For a second downlink data transmission process, the network device determines reference time k1 in a first downlink data transmission process, and determines a time window D1 corresponding to the reference time k1. The network device determines, based on a resource configuration of the PDSCH, that a start moment of the second downlink data transmission process is in the time window D1, and the network device maintains a contention window value by using a first rule, based on responses that are of PDSCH#1 to PDSCH#4 and that are received in the time window D1 (for example, corresponding to Implementation 2 of using the first rule in the embodiment shown in FIG. 2). Because a proportion, in the four PDSCHs, of PDSCHs for which an ACK is received does not exceed a specified threshold 20%, and a proportion, in the four PDSCHs, of PDSCHs for which a NACK is received does not exceed 80%, the network device keeps a current contention window value CW0 unchanged. A contention window value actually used by the network device in the second downlink data transmission process is CW0.

When transmitting a PDSCH in the second downlink data transmission process, the network device may further notify the terminal device that the terminal device needs to feed back responses for PDSCH#1 to PDSCH#3 again. Therefore, after the second downlink data transmission process ends, the terminal device feeds back responses for the PDSCH#1 to PDSCH#3 again and feeds back a response for data sent in the second data transmission process.

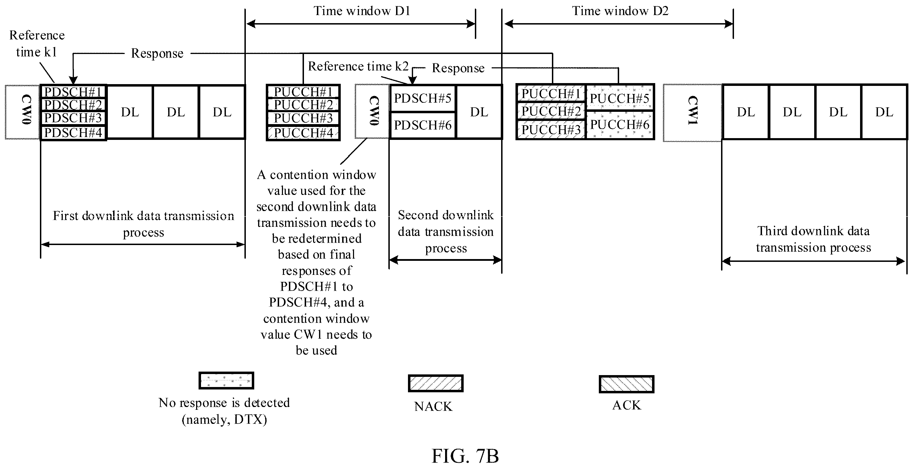

As shown in FIG. 7A and FIG. 7B, after the second downlink data transmission ends, all responses that are of PDSCH#1 to PDSCH#3 and that are received by the network device are NACKs. In this case, the network device reuses the first rule (for example, corresponding to Implementation 2 of using the first rule in the embodiment shown in FIG. 2) to maintain the contention window value. Because a proportion 100%, in the PDSCHs PDSCH#1 to PDSCH#4, of PDSCHs for which a NACK is received exceeds the specified threshold 80%, it indicates that in a current network transmission status, a contention window value that needs to be used in the second downlink data transmission process needs to be obtained by increasing the contention window value based on CW0, namely, CW1. The network device may determine that a current contention window value needs to be CW1. Then the network device determines reference time k2 for to-be-performed third data transmission in the second data transmission process, and determines a time window D2 corresponding to the reference time k2.

As shown in FIG. 7A, the network device determines, based on a resource configuration of the PDSCH, that a start moment of the third downlink data transmission process is in the time window D2, and the network device continues, based on responses that are of PDSCH#5 and PDSCH#6 and that are received in the time window D2, to use the first rule (for example, corresponding to Implementation 2 of using the first rule in the embodiment shown in FIG. 2) to maintain the contention window value. A response of PDSCH#5 is an ACK, and a response of PDSCH#6 is DTX. Because a proportion 50%, in the two PDSCHs, of PDSCHs for which an ACK is received exceeds preset 20%, the network device needs to adjust the contention window value to a minimum contention window value CWmin,p. A contention window value used by the network device in the third downlink data transmission process is CWmin,p, as shown in the figure.

As shown in FIG. 7B, the network device determines, based on a resource configuration of the PDSCH, that a start moment of the third downlink data transmission process is in the time window D2, and the network device continues, based on responses that are of PDSCH#5 and PDSCH#6 and that are received in the time window D2, to use the first rule (for example, corresponding to Implementation 2 of using the first rule in the embodiment shown in FIG. 2) to maintain the contention window value. A response of PDSCH#5 is an ACK, and a response of PDSCH#6 is DTX. Because a proportion 0%, in the two PDSCHs, of PDSCHs for which a NACK is received does not exceed preset 80%, and a proportion 0%, in the two PDSCHs, of PDSCHs for which an ACK is received does not exceed preset 20%, either, the network device keeps the current contention window value CW1 unchanged. A contention window value used by the network device in the third downlink data transmission process is CW1, as shown in the figure.

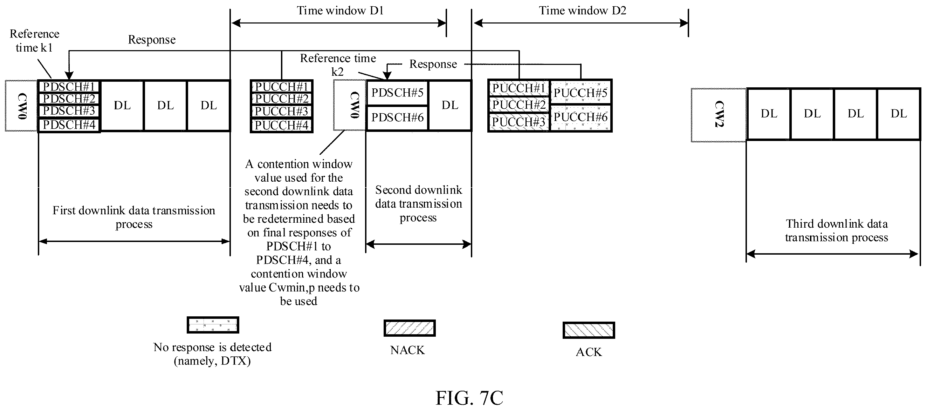

As shown in FIG. 7C, after the second downlink data transmission ends, all responses that are of PDSCH#1 to PDSCH#3 and that are received by the network device are ACKs. In this case, the network device reuses the first rule (for example, corresponding to Implementation 2 of using the first rule in the embodiment shown in FIG. 2) to maintain the contention window value. Because a proportion 750%, in the PDSCHs PDSCH#1 to PDSCH#4, of PDSCHs for which an ACK is received exceeds the specified threshold 20%, it indicates that in a current network transmission status, a contention window value that needs to be used in the second downlink data transmission process needs to be a minimum contention window value CWmin,p. The network device may determine that a current contention window value needs to be CWmin,p. Then the network device determines reference time k2 for to-be-performed third data transmission in the second data transmission process, and determines a time window D2 corresponding to the reference time k2.

Still as shown in FIG. 7C, the network device determines, based on a resource configuration of the PDSCH, that a start moment of the third downlink data transmission process follows the end of the time window D2, and the network device continues, based on responses that are of PDSCH#5 and PDSCH#6 and that are received in the time window D2, to use a second rule (for example, corresponding to Implementation 1 of using the second rule in the embodiment shown in FIG. 2) to maintain the contention window value. Both a response of PDSCH#5 and a response of PDSCH#6 are DTX. Because a proportion 100%, in the two PDSCHs, of PDSCHs for which a NACK is received exceeds preset 80%, the network device increases the contention window value based on the contention window value CWmin,p. An increased contention window value is CW2. A contention window value used by the network device in the third downlink data transmission process is CW2, as shown in the figure.

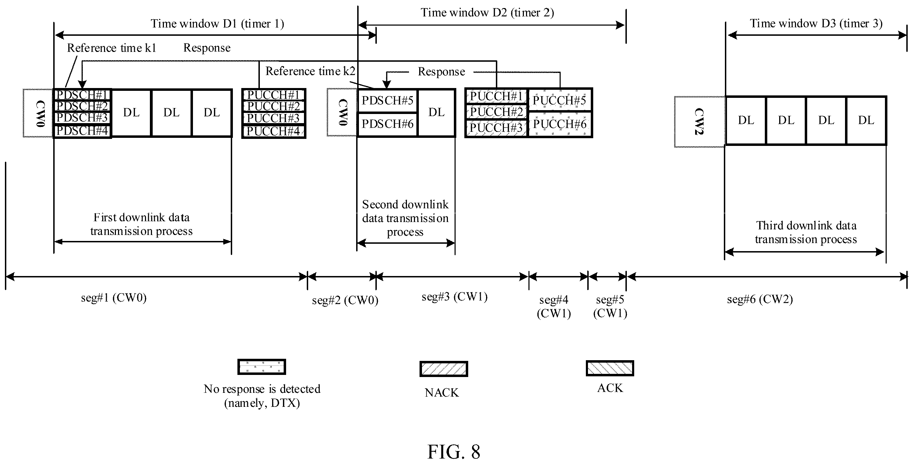

Instance 8: A scenario is the same as that in Instance 2. Details are not described herein again. In this instance, the network device may be triggered, based on the end of a time window, to update and maintain a contention window value. The network device determines, a plurality of times, reference time and a time window corresponding to the reference time, to continuously maintain the contention window value. For a specific process, refer to FIG. 8.

When enabling a first downlink data transmission process, the network device starts a first counter timer 1 (initialized to 0 or D1). The network device determines reference time k1 in the first downlink data transmission process, where the network device has sent PDSCH#1 to PDSCH#4 within the reference time k1.

In the first downlink data transmission process, a contention window value stored in the network device is CW0 and remains at CW0 until a moment at which responses (PUCCH#1 to PUCCH#4) of PDSCH#1 to PDSCH#4 are expected to be received (seg#1).

Because PUCCH#1 to PUCCH#3 received by the network device are DTX, PUCCH#4 received by the network device is a NACK, and the first counter has not reached D1 or 0, the network device does not change the current contention window value (keep CW0) until the timer 1 reaches a time window boundary (increases to D1 or decreases to 0) (seg#2).

Because a contention window value currently maintained by the network device is CW0 when the network device performs LBT before the network device performs a second downlink data transmission process, a contention window value used in the second downlink data transmission process is CW0.

When enabling the second downlink data transmission process, the network device starts a second counter timer 2 (initialized to 0 or D2). Because the contention window value does not change in a time window D1, and no response corresponding to the PDSCH within the reference time k1 is received, starting from a boundary of the time window D1 (seg#3), the network device adjusts, by using a first rule (for example, Implementation 2 of using the first rule in the embodiment shown in FIG. 2) based on responses of PDSCH#1 to PDSCH#4, the contention window value to a next larger value CW1 based on the current contention window CW0.

When the network device receives a response of the PDSCH within the reference time k1 again, the timer 1 has expired, and the network device has updated the contention window value, and the network device has updated the contention window value. Therefore, the network device still keeps the contention window value CW1 unchanged (seg#4).

When the network device detects that PUCCH#5 and PUCCH#6 are DTX, because the second counter timer 2 corresponding to reference time k2 has not expired, the network device continues to keep the contention window value CW1 unchanged in seg#5. Because a response of a PDSCH within the reference k2 is not received after the timer 2 expires (seg#6), the network device may adjust the contention window value from CW1 to a next larger value CW2 by using a second rule (for example, Implementation 1 of using the second rule in the embodiment shown in FIG. 2) based on the received responses of PDSCH#5 and PDSCH#6.

Because a current contention window value stored in the network device is CW2 when the network device performs LBT before the network device performs third downlink transmission, the network device performs LBT by using the contention window value CW2.

This application further provides another contention window maintenance method. The method may be applied to the communications systems shown in FIG. 1A and FIG. 1B. A communications device involved in the method may be a network device or a terminal device that is in the communications system, that supports use of an unlicensed spectrum, and that uses an LBT mechanism for channel contention. This embodiment of this application is applicable to a scenario in which the communications device supports a plurality of times of response feedback. A procedure of the method includes the following steps.

The communications device determines reference time, where the communications device has sent N pieces of reference data within the first reference time, and N is an integer greater than 0.

The communications device receives a response of any piece of first reference data at least once after the reference time.

The communications device maintains a contention window value based on a last received response of each piece of reference data.

In this embodiment, the communications device may maintain the contention window value by using a plurality of implementations. For details, refer to the four implementations of the first rule and the two implementations corresponding to the second rule in the embodiment shown in FIG. 2. Details are not described herein again.

Because the last received response of each piece of reference data can more accurately reflect a current network transmission status, the communications device maintains the contention window value based on the last received response of each piece of reference data, so that accuracy of the determined contention window value can be improved, thereby reducing, while ensuring channel access fairness, a channel access delay of the communications device and a probability of a data transmission collision that occurs because different communications devices select a same contention window.

This application further provides still another contention window maintenance method. The method may be applied to the communications systems shown in FIG. 1A and FIG. 1B. A communications device involved in the method may be a network device or a terminal device that is in the communications system, that supports use of an unlicensed spectrum, and that uses an LBT mechanism for channel contention. A procedure of the method includes the following steps.

The communications device determines reference time, where the communications device has sent N pieces of reference data within the first reference time, and N is an integer greater than 0.

The communications device increases a contention window value based on a current contention window value when a proportion of first target reference data in the N pieces of reference data does not exceed a first threshold or a proportion of second target reference data in the N pieces of reference data exceeds a second threshold; or
the communications device adjusts the contention window value to a minimum contention window value when the proportion of the first target reference data in the N pieces of reference data exceeds the first threshold or the proportion of the second target reference data in the N pieces of reference data does not exceed the second threshold.

The first target reference data is reference data for which the communications device receives an ACK, and the second target reference data is reference data for which the communications device does not receive an ACK, in other words, the second target reference data is reference data for which the communications device receives a NACK and DTX.

In this implementation, a sum of the first threshold and the second threshold is equal to 1.

Because the communications device maintains the contention window value immediately after the communications device receives responses of the N pieces of reference data, a relatively large number of responses are not received by the communications device due to an LBT failure of a receive end or another case. In this case, when the communications device does not receive ACKs of some reference data, the communications device may incorrectly count the reference data as unsuccessfully transmitted data, and incorrectly adjust and increase the contention window value when the contention window value originally needs to be adjusted to the minimum contention window value. This increases a channel access delay of the communications device and finally affects channel access fairness of the communications device

To resolve the foregoing problem, the second threshold (for example, 90%) is set to be greater than a failure threshold (for example, 80%) in a conventional maintenance method. In this way, in the method, a condition for increasing the contention window value can be more stringent, so that a probability that the communications device increases the contention window value due to an ACK response delay is reduced, thereby ensuring a channel access speed of the communications device and finally ensuring channel access fairness of the communications device.

This application further provides still another contention window maintenance method. The method may be applied to the communications systems shown in FIG. 1A and FIG. 1B. A communications device involved in the method may be a network device or a terminal device that is in the communications system, that supports use of an unlicensed spectrum, and that uses an LBT mechanism for channel contention. In a conventional contention window maintenance method, reference data for which DTX is received is counted as unsuccessfully received reference data, and an error caused by such counting further causes an error of a determined contention window value. Therefore, in the method provided in this embodiment of this application, the communications device no longer counts, as unsuccessfully received reference data, reference data for which DTX is received.

In an implementation, the communications device may maintain a contention window value by performing the following procedure:

The communications device determines reference time, where the communications device has sent N pieces of reference data within the first reference time, and N is an integer greater than 0.

The communications device adjusts the contention window value to a minimum contention window value when a proportion of first target reference data in the N pieces of reference data exceeds a first threshold; or
the communications device increases the contention window value based on a current contention window value when a proportion of second target reference data in the N pieces of reference data exceeds a second threshold; or
the communications device does not adjust the contention window value when the proportion of the first target reference data in the N pieces of reference data does not exceed the first threshold and the proportion of the second target reference data in the N pieces of reference data does not exceed the second threshold.

The first target reference data is reference data for which the communications device receives an ACK, and the second target reference data is reference data for which the communications device receives a failure response NACK.

Optionally, in this implementation, a sum of the first threshold and the second threshold is equal to 1.

It should be noted that specific values of the first threshold and the second threshold are not limited in this embodiment of this application. For example, the first threshold may be set to 20%, and the second threshold may be set to 80%.

Because the communications device maintains the contention window value immediately after the communications device receives responses of the N pieces of reference data, a relatively large number of responses are not received by the communications device due to an LBT failure of a receive end or another case. The response not received by the communications device may be an ACK, or may be a NACK. In this implementation, when maintaining the contention window value, the communications device considers only reference data for which an ACK and a NACK are received, and does not collect statistics about reference data for which DTX is received. In this way, the following case can be avoided: Because an ACK of reference data is not received due to a delay, the first reference data is incorrectly counted as reference data for which DTX is received. Because a number of pieces of reference data for which a NACK is received is less than or equal to a number of pieces of reference data for which an ACK is not received, even if the second threshold is the same as or close to a failure threshold (for example, 80%) in the conventional technology, a condition for increasing the contention window value can be more stringent, thereby reducing a probability of increasing the contention window value, ensuring a channel access speed of the communications device, and finally ensuring channel access fairness of the communications device.

Further, because the second threshold is the same as or close to the failure threshold (for example, 80%) in the conventional technology, the first threshold is the same as or close to a success threshold (for example, 20%) in the conventional technology. Therefore, in this implementation, it can be ensured that a condition for adjusting the contention window value to the minimum value is not loosened, so that a probability of adjusting the contention window value to the minimum value is not increased, thereby further reducing a probability of a data transmission collision that occurs because the communications device decreases the contention window value.

In addition, in this implementation, when the responses of the N pieces of reference data meet neither the condition for increasing the contention window value nor a condition for decreasing contention window data, the communications device may keep the contention window value unchanged. In this way, a channel access speed of the communications device can be ensured, and a probability of a data transmission collision that occurs because the communications device decreases the contention window value can also be reduced.

In another implementation, the communications device may maintain a contention window value by performing the following procedure:

The communications device determines reference time, where the communications device has sent N pieces of reference data within the first reference time, and N is an integer greater than 0.

The communications device does not adjust a contention window value when a proportion of first target reference data in the N pieces of reference data does not exceed a first threshold; or
the communications device adjusts, by performing the following step, the contention window value when the proportion of the first target reference data in the N pieces of reference data exceeds the first threshold:
the communications device increases the contention window value based on a current contention window value when a proportion of second target reference data in the first target reference data does not exceed a second threshold or a proportion of third target reference data in the first target reference data exceeds a third threshold; or
the communications device adjusts the contention window value to a minimum contention window value when the proportion of the second target reference data in the first target reference data exceeds the second threshold or the proportion of the third target reference data in the first target reference data does not exceed the third threshold.

The first target reference data is reference data for which the communications device receives an ACK and reference data for which the communications device receives a NACK, the second target reference data is the reference data for which the communications device receives an ACK, and the third target reference data is the reference data for which the communications device receives a NACK.

Optionally, in this implementation, a sum of the second threshold and the third threshold is equal to 1.

It should be noted that specific values of the second threshold and the third threshold are not limited in this embodiment of this application.

For example, the second threshold may be set to 20%, and the third threshold may be set to 80%.

Because the communications device maintains the contention window value immediately after the communications device receives responses of the N pieces of reference data, a relatively large number of responses are not received by the communications device due to an LBT failure of a receive end or another case. When there are a relatively small number of pieces of reference data (namely, the first target reference data) for which the communications device receives a response, a proportion, in the N pieces of reference data, of reference data for which an ACK is received is relatively small. If the communications device still maintains the contention window value according to a conventional method, a probability that the communications device increases the contention window value is relatively large. This increases a channel access delay of the communications device and finally affects channel access fairness of the communications device.

To resolve the foregoing problem, the communications device determines, based on the following two proportions that can better reflect an actual ACK and NACK distribution status, whether to increase the contention window value or to adjust the contention window value to the minimum contention window value, so that accuracy of the determined contention window value can be improved: a proportion, in reference data for which an ACK and a NACK are received, of reference data for which an ACK is received and a proportion, in the first reference data for which an ACK and a NACK are received, of reference data for which a NACK is received. Therefore, in this implementation, a channel access speed of the communications device can be ensured, and a probability of a data transmission collision that occurs because the communications device decreases the contention window value can also be reduced.

In addition, when there are a very small number of pieces of reference data (namely, the first target reference data) for which the communications device receives a response, the actual ACK and NACK distribution status cannot be accurately reflected even if the foregoing two proportions are used. To ensure a channel access speed of the communications device and also reduce a probability of a data transmission collision that occurs because the communications device decreases the contention window value, the communications device may keep the contention window value unchanged in this case.

It should be noted that a specific value of the first threshold is not limited in this embodiment of this application. Optionally, the fifth threshold may be set to a relatively small value such as 0% or 1%.

In another implementation, the communications device may maintain a contention window value by performing the following procedure:

The communications device determines reference time, where the communications device has sent N pieces of reference data within the first reference time.

The communications device increases a contention window value based on a current contention window value when a proportion of first target reference data in the N pieces of reference data does not exceed a first threshold or a proportion of second target reference data in the N pieces of reference data exceeds a second threshold; or
the communications device adjusts the contention window value to a minimum contention window value when the proportion of the first target reference data in the N pieces of reference data exceeds the first threshold or the proportion of the second target reference data in the N pieces of reference data does not exceed the second threshold.

The first target reference data is reference data for which the communications device receives an ACK and reference data for which the communications device receives a NACK, and the second target reference data is reference data for which the communications device does not receive an ACK or a NACK in the N pieces of reference data, in other words, the second target reference data is reference data for which the communications device detects DTX.

Optionally, in this implementation, a sum of the first threshold and the second threshold is equal to 1.

It should be noted that specific values of the first threshold and the second threshold are not limited in this embodiment of this application.

For example, the first threshold may be set to 20%, and the second threshold may be set to 80%.

Because the communications device maintains the contention window value immediately after the communications device receives responses of the N pieces of reference data, a relatively large number of responses are not received by the communications device due to a delay or an LBT failure of a receive end. The communications device may not receive a response due to a data transmission collision. Therefore, when there are a relatively small number of pieces of reference data for which the communications device receives a response (an ACK and a NACK), it indicates that there are a relatively large number of pieces of first reference data for which a valid response is not received (or DTX is received), and a probability of a data transmission collision is relatively large. Therefore, the communications device may increase the contention window value to reduce a probability of a transmission collision occurring in a subsequent data transmission process.

Correspondingly, when there are a relatively large number of pieces of reference data for which the communications device receives a response (an ACK and a NACK), it indicates that there are a relatively small number of pieces of reference data for which a response is not received (or DTX is received), and a probability of a data transmission collision is relatively small. Therefore, the communications device may adjust the contention window value to the minimum contention window value. In this way, a channel access speed of the communications device can be improved.

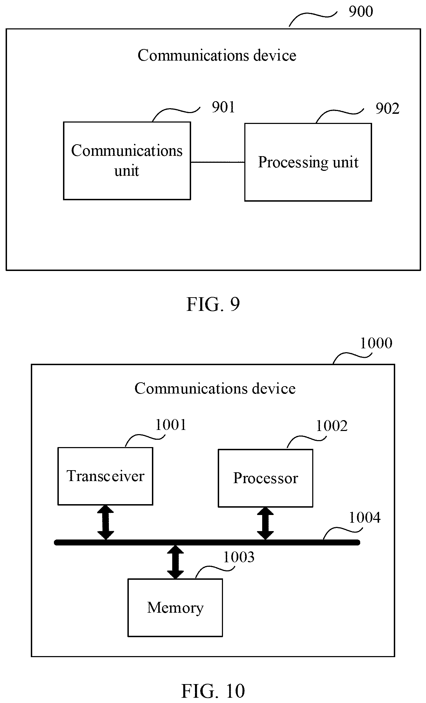

Based on the foregoing embodiments, an embodiment of this application provides a communications device. A structure of the device is shown in FIG. 9. The device includes a communications unit 901 and a processing unit 902. The communications device 900 may be a network device or a terminal device that supports use of an unlicensed spectrum and that uses an LBT mechanism for channel contention, and may implement the contention window maintenance method in the foregoing embodiment. The terminal device and the network device may be used in the communications systems shown in FIG. 1A and FIG. 1B.

Optionally, when the communications device implements the contention window maintenance method shown in FIG. 2, functions of the units are as follows:

The communications unit 901 is configured to receive and send data.

The processing unit 902 is configured to: determine first reference time, where the communications unit 901 has sent N pieces of first reference data within the first reference time, and N is an integer greater than 0; maintain a contention window value in a first time window by using a first rule, based on responses of the N pieces of first reference data; and maintain, after the first time window, the contention window value by using a second rule, based on the responses of the N pieces of first reference data.

In an implementation, when maintaining the contention window value in the first time window by using the first rule based on the responses of the N pieces of first reference data, the processing unit 902 is specifically configured to:
increase the contention window value based on a current contention window value when a proportion of first target reference data in the N pieces of first reference data does not exceed a first threshold or a proportion of second target reference data in the N pieces of first reference data exceeds a second threshold; or
adjust the contention window value to a minimum contention window value when the proportion of the first target reference data in the N pieces of first reference data exceeds the first threshold or the proportion of the second target reference data in the N pieces of first reference data does not exceed the second threshold.

The first target reference data is first reference data for which the communications unit 901 receives a success response ACK, and the second target reference data is first reference data for which the communications unit 901 does not receive an ACK.

In an implementation, when maintaining the contention window value in the first time window by using the first rule based on the responses of the N pieces of first reference data, the processing unit 902 is specifically configured to:
adjust the contention window value to a minimum contention window value when a proportion of first target reference data in the N pieces of first reference data exceeds a third threshold; or
increase the contention window value based on a current contention window value when a proportion of third target reference data in the N pieces of first reference data exceeds a fourth threshold; or
not adjust the contention window value when the proportion of the first target reference data in the N pieces of first reference data does not exceed the third threshold and the proportion of the third target reference data in the N pieces of first reference data does not exceed the fourth threshold.

The first target reference data is first reference data for which the communications unit 901 receives an ACK, and the third target reference data is first reference data for which the communications unit 901 receives a failure response NACK.

In an implementation, when maintaining the contention window value in the first time window by using the first rule based on the responses of the N pieces of first reference data, the processing unit 902 is specifically configured to:
not adjust the contention window value when a proportion of fourth target reference data in the N pieces of first reference data does not exceed a fifth threshold; or
adjust, by performing the following step, the contention window value when the proportion of the fourth target reference data in the N pieces of first reference data exceeds the fifth threshold:
   increasing the contention window value based on a current contention window value when a proportion of first target reference data in the fourth target reference data does not exceed a sixth threshold or a proportion of third target reference data in the fourth target reference data exceeds a seventh threshold; or
   adjusting the contention window value to a minimum contention window value when the proportion of the first target reference data in the fourth target reference data exceeds the sixth threshold or the proportion of the third target reference data in the fourth target reference data does not exceed the seventh threshold.

The fourth target reference data is first reference data for which the communications unit 901 receives an ACK and first reference data for which the communications unit 901 receives a NACK, the first target reference data is the first reference data for which the communications unit 901 receives an ACK, and the third target reference data is the first reference data for which the communications unit 901 receives a NACK.

In an implementation, when maintaining the contention window value in the first time window by using the first rule based on the responses of the N pieces of first reference data, the processing unit 902 is specifically configured to:
increase the contention window value based on a current contention window value when a proportion of fourth target reference data in the N pieces of first reference data does not exceed an eighth threshold or a proportion of fifth target reference data in the N pieces of first reference data exceeds a ninth threshold; or
adjust the contention window value to a minimum contention window value when the proportion of the fourth target reference data in the N pieces of first reference data exceeds the eighth threshold or the proportion of the fifth target reference data in the N pieces of first reference data does not exceed the ninth threshold.

The fourth target reference data is first reference data for which the communications unit 901 receives an ACK and first reference data for which the communications unit 901 receives a NACK, and the fifth target reference data is first reference data for which the communications unit 901 does not receive an ACK or a NACK in the N pieces of first reference data.

In an implementation, when maintaining, after the first time window ends, the contention window value by using the second rule based on the responses of the N pieces of first reference data, the processing unit 902 is specifically configured to:
when the first time window ends, maintain the contention window value by using the second rule based on the responses of the N pieces of first reference data; or
when a response of at least one piece of first reference data is received after the first time window ends, maintain the contention window value by using the second rule based on the responses of the N pieces of first reference data; or
before performing a data transmission process after the first time window ends, maintain the contention window value by using the second rule based on the responses of the N pieces of first reference data.

In an implementation, when maintaining the contention window value by using the second rule based on the responses of the N pieces of first reference data, the processing unit 902 is specifically configured to:
increase the contention window value based on the current contention window value when the proportion of the first target reference data in the N pieces of first reference data does not exceed a tenth threshold or the proportion of the second target reference data in the N pieces of first reference data exceeds an eleventh threshold; or
adjust the contention window value to the minimum contention window value when the proportion of the first target reference data in the N pieces of first reference data exceeds the tenth threshold or the proportion of the second target reference data in the N pieces of first reference data does not exceed the eleventh threshold.

The first target reference data is the first reference data for which the communications unit 901 receives a success response ACK, and the second target reference data is the first reference data for which the communications unit 901 does not receive an ACK.

In an implementation, when maintaining the contention window value by using the second rule based on the responses of the N pieces of first reference data, the processing unit 902 is specifically configured to:
increase the contention window value based on the current contention window value when the proportion of the fourth target reference data in the N pieces of first reference data does not exceed a twelfth threshold or the proportion of the fifth target reference data in the N pieces of first reference data exceeds a thirteenth threshold; or
adjust the contention window value to the minimum contention window value when the proportion of the fourth target reference data in the N pieces of first reference data exceeds the twelfth threshold or the proportion of the fifth target reference data in the N pieces of first reference data does not exceed the thirteenth threshold.

The fourth target reference data is the first reference data for which the communications unit 901 receives an ACK and the first reference data for which the communications unit 901 receives a NACK, and the fifth target reference data is the first reference data for which the communications unit 901 does not receive an ACK or a NACK in the N pieces of first reference data.

In an implementation, the processing unit 902 is specifically configured to: receive a response of any piece of first reference data at least once by using the communications unit 901, and use a last received response of the first reference data as a final response of the first reference data.

In an implementation, a start moment of the first time window precedes or follows the first reference time, where when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, where the target time domain resource is a preset earliest time domain resource used for transmitting the responses of the N pieces of first reference data.

In an implementation, a size of the first time window may be preset, be agreed upon between the communications device and a receive end, be configured by the communications device for the receive end, or be equal to maximum duration for which the receive end waits for the communications device to schedule a response resource.

In an implementation, the first time window is maintained by using a timer.

In an implementation, the first reference time is located in an L^{th} data transmission process, the first time window corresponds to the first reference time, and L is an integer greater than 0; and the processing unit 902 is further configured to:
determine K^{th} reference time, where the second reference time is located in an (L+K)^{t1} data transmission process, the communications unit 901 has sent M pieces of second reference data within the K^{th} reference time, M is an integer greater than 0, and K is an integer greater than 1;
receive a response of at least one piece of (K-Y)^{th} reference data after the K^{th} reference time by using the communications unit 901, where the (K-Y)^{th} reference data is reference data that has been sent within (K-Y)^{th} reference time, the (K-Y)^{th} reference time is located in an (L+K-Y)^{th} data transmission process, and Y is an integer greater than 0 and less than K;
redetermine, based on a contention window actually used in the (L+K-Y)^{th} data transmission process and a last received response of each piece of (K-Y)^{th} reference data, a contention window value that needs to be used in an (L+K-Y+1)^{th} data transmission process;
determine, based on a contention window value that needs to be used in a previous data transmission process and a last received response of reference data that has been sent within reference time in the previous data transmission process, a contention window value that needs to be used in a current data transmission process; and repeat the foregoing step until a contention window value that needs to be used in the (L+K)^{th} data transmission process is determined;
update the current contention window value to the contention window value that needs to be used in the (L+K)^{th} data transmission process;
maintain, in a K^{th} time window corresponding to the K^{th} reference time, the contention window value by using the first rule based on responses of the M pieces of second reference data; and
maintain, after the K^{th} time window corresponding to the K^{th} reference time ends, the contention window value by using the second rule based on the responses of the M pieces of second reference data.

Optionally, when the communications device implements another contention window maintenance method, functions of the units are as follows:

The communications unit 901 is configured to receive and send data.

The processing unit 902 is configured to: determine reference time, where the communications unit 901 has sent N pieces of reference data within the first reference time, and N is an integer greater than 0; receive a response of any piece of first reference data at least once after the reference time; and maintain a contention window value based on a last received response of each piece of reference data.

Optionally, when the communications device implements another contention window maintenance method, functions of the units are as follows: The communications unit 901 is configured to receive and send data.

The processing unit 902 is configured to: determine reference time, where the communications unit 901 has sent N pieces of reference data within the first reference time, and N is an integer greater than 0; and adjust a contention window value to a minimum contention window value when a proportion of first target reference data in the N pieces of reference data exceeds a first threshold; or increase the contention window value based on a current contention window value when a proportion of second target reference data in the N pieces of reference data exceeds a second threshold; or not adjust the contention window value when the proportion of the first target reference data in the N pieces of reference data does not exceed the first threshold and the proportion of the second target reference data in the N pieces of reference data does not exceed the second threshold.

The first target reference data is reference data for which the communications unit 901 receives an ACK, and the second target reference data is reference data for which the communications unit 901 receives a failure response NACK.

Optionally, when the communications device implements another contention window maintenance method, functions of the units are as follows: The communications unit 901 is configured to receive and send data.

The processing unit 902 is configured to: determine reference time, where the communications unit 901 has sent N pieces of reference data within the first reference time, and N is an integer greater than 0; and not adjust a contention window value when a proportion of first target reference data in the N pieces of reference data does not exceed a first threshold; or adjust, by performing the following step, the contention window value when the proportion of the first target reference data in the N pieces of reference data exceeds the first threshold:
increasing the contention window value based on a current contention window value when a proportion of second target reference data in the first target reference data does not exceed a second threshold or a proportion of third target reference data in the first target reference data exceeds a third threshold; or
adjusting the contention window value to a minimum contention window value when the proportion of the second target reference data in the first target reference data exceeds the second threshold or the proportion of the third target reference data in the first target reference data does not exceed the third threshold.

The first target reference data is reference data for which the communications unit 901 receives an ACK and reference data for which the communications unit 901 receives a NACK, the second target reference data is the reference data for which the communications unit 901 receives an ACK, and the third target reference data is the reference data for which the communications unit 901 receives a NACK.

Optionally, when the communications device implements another contention window maintenance method, functions of the units are as follows: The communications unit 901 is configured to receive and send data.

The processing unit 902 is configured to: determine reference time, where the communications unit 901 has sent N pieces of reference data within the first reference time; and increase a contention window value based on a current contention window value when a proportion of first target reference data in the N pieces of reference data does not exceed a first threshold or a proportion of second target reference data in the N pieces of reference data exceeds a second threshold; or adjust the contention window value to a minimum contention window value when the proportion of the first target reference data in the N pieces of reference data exceeds the first threshold or the proportion of the second target reference data in the N pieces of reference data does not exceed the second threshold.

The first target reference data is reference data for which the communications unit 901 receives an ACK and reference data for which the communications unit 901 receives a NACK, and the second target reference data is reference data for which the communications unit 901 does not receive an ACK or a NACK in the N pieces of reference data.

It should be noted that the module division in the embodiments of this application is an example, and is merely logical function division, and there may be other division manners in actual implementation. In addition, functional units in the embodiments of this application may be integrated into one processing unit, or each of the units may exist alone physically, or at least two units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to a current technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on the foregoing embodiments, an embodiment of this application further provides a communications device. The communications device may be a network device or a terminal device that supports use of an unlicensed spectrum and that uses an LBT mechanism for channel contention, and may implement the contention window maintenance method in the foregoing embodiment. The terminal device and the network device may be used in the communications systems shown in FIG. 1A and FIG. IB. As shown in FIG. 10, the communications device 1000 includes a transceiver 1001 and a processor 1002. Optionally, the communications device 1000 further includes a memory 1003. The transceiver 1001, the processor 1002, and the memory 1003 are connected to each other.

Optionally, the transceiver 1001, the processor 1002, and the memory 1003 are connected to each other by using a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

The transceiver 1001 is configured to: receive and send data, to communicate with another device in the communications system. Optionally, the transceiver 1001 may be implemented by a radio frequency apparatus and an antenna.

The processor 1002 is configured to implement functions of the communications device in the contention window maintenance method provided in the foregoing embodiment. For details, refer to the description in the foregoing embodiment. Details are not described herein again.

The processor 1002 may be a central processing unit (central processing unit, CPU), a network processor (network processor, NP), a combination of a CPU and an NP, or the like. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. When implementing the foregoing functions, the processor 1002 may be implemented by hardware, or certainly may be implemented by hardware executing corresponding software.

The memory 1003 is configured to store program instructions, and the like. Specifically, the program instructions may include program code, and the program code includes computer operation instructions. The memory 1003 may include a random access memory (random access memory, RAM), or may be a non-volatile memory (non-volatile memory), for example, at least one magnetic disk memory. The processor 1002 executes the program instructions stored in the memory 1003 to implement the foregoing functions, so that the contention window maintenance method provided in the foregoing embodiment is implemented.

Based on the foregoing embodiments, an embodiment of this application further provides a computer program. When the computer program runs on a computer, the computer performs the contention window maintenance method provided in the foregoing embodiment.

Based on the foregoing embodiments, an embodiment of this application further provides a computer storage medium. The computer storage medium stores a computer program. When the computer program is executed by a computer, the computer performs the contention window maintenance method provided in the foregoing embodiment.

Based on the foregoing embodiments, an embodiment of this application further provides a chip. The chip is configured to read a computer program stored in a memory to implement the contention window maintenance method provided in the foregoing embodiment.

Based on the foregoing embodiments, an embodiment of this application provides a chip system. The chip system includes a processor, configured to support a computer apparatus in implementing functions of the communications device in the foregoing embodiment. In a possible design, the chip system further includes a memory, and the memory is configured to store a program and data that are necessary for the computer apparatus. The chip system may include a chip, or may include a chip and another discrete component.

In conclusion, the embodiments of this application provide a contention window adjustment method and a device. In the method, a communications device may maintain a size of a contention window in a time window by using a first rule. The communications device sets specific buffer time (namely, time window) for receiving a response. Within the buffer time, the communications device maintains a contention window value by using the first rule different from that in the conventional technology, so that flexibility of maintaining the contention window value by the communications device and accuracy of determining the contention window value by the communications device can be improved. In addition, after the buffer time ends, a relatively small number of responses are not received by the communications device due to a delay within the buffer time, so that accuracy of determining the contention window value when the communications device maintains the contention window value by using a second rule can be improved. In conclusion, the method can improve accuracy of determining the contention window value by the communications device. Therefore, while ensuring channel access fairness, the method can reduce a channel access delay of the communications device and a probability of a data transmission collision that occurs because different communications devices select a same contention window.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the devices (systems), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specified function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the claims of this application and equivalent technologies thereof.

## Claims

1. A contention window maintenance method, comprising:
maintaining, by a communications device, a contention window value in a first time window by using a first rule, based on responses of N pieces of first reference data sent by the communications device within first reference time, wherein N is an integer greater than 0.

2. The method according to claim 1, wherein the maintaining, by a communications device, a contention window value in a first time window by using a first rule, based on responses of N pieces of first reference data comprises:
increasing, by the communications device, the contention window value based on a current contention window value when a proportion, in the N pieces of first reference data, of first reference data for which the communications device receives a response ACK does not exceed a first threshold or a proportion, in the N pieces of first reference data, of first reference data for which the communications device does not receive an ACK exceeds a second threshold; or
adjusting, by the communications device, the contention window value to a minimum contention window value when the proportion, in the N pieces of first reference data, of the first reference data for which the communications device receives an ACK exceeds the first threshold or the proportion, in the N pieces of first reference data, of the first reference data for which the communications device does not receive an ACK does not exceed the second threshold.

3. The method according to claim 1, wherein the maintaining, by a communications device, a contention window value in a first time window by using a first rule, based on responses of N pieces of first reference data comprises:
adjusting, by the communications device, the contention window value to a minimum contention window value when a proportion, in the N pieces of first reference data, of first reference data for which the communications device receives an ACK exceeds a third threshold; or
increasing, by the communications device, the contention window value based on a current contention window value when a proportion, in the N pieces of first reference data, of first reference data for which the communications device receives a negative acknowledgment NACK exceeds a fourth threshold; or
skipping adjusting, by the communications device, the contention window value when the proportion, in the N pieces of first reference data, of the first reference data for which the communications device receives an ACK does not exceed the third threshold and the proportion, in the N pieces of first reference data, of the first reference data for which the communications device receives a NACK does not exceed the fourth threshold.

4. The method according to claim 1, wherein the maintaining, by a communications device, a contention window value in a first time window by using a first rule, based on responses of N pieces of first reference data comprises:
skipping adjusting, by the communications device, the contention window value when a proportion, in the N pieces of first reference data, of first reference data for which the communications device receives an ACK and first reference data for which the communications device receives a NACK does not exceed a fifth threshold; or
adjusting, by the communications device by performing the following step, the contention window value when the proportion, in the N pieces of first reference data, of the first reference data for which the communications device receives an ACK and the first reference data for which the communications device receives a NACK exceeds the fifth threshold:
increasing, by the communications device, the contention window value based on a current contention window value when a proportion, in the first reference data for which the communications device receives an ACK and the first reference data for which the communications device receives a NACK, of the first reference data for which the communications device receives an ACK does not exceed a sixth threshold or a proportion, in the first reference data for which the communications device receives an ACK and the first reference data for which the communications device receives a NACK, of the first reference data for which the communications device receives a NACK exceeds a seventh threshold; or
adjusting, by the communications device, the contention window value to a minimum contention window value when the proportion, in the first reference data for which the communications device receives an ACK and the first reference data for which the communications device receives a NACK, of the first reference data for which the communications device receives an ACK exceeds the sixth threshold or the proportion, in the first reference data for which the communications device receives an ACK and the first reference data for which the communications device receives a NACK, of the first reference data for which the communications device receives a NACK does not exceed the seventh threshold.

5. The method according to claim 1, wherein the maintaining, by a communications device, a contention window value in a first time window by using a first rule, based on responses of N pieces of first reference data comprises:
increasing, by the communications device, the contention window value based on a current contention window value when a proportion, in the N pieces of first reference data, of first reference data for which the communications device receives an ACK and first reference data for which the communications device receives a NACK does not exceed an eighth threshold or a proportion, in the N pieces of first reference data, of first reference data for which the communications device does not receive an ACK or a NACK exceeds a ninth threshold; or
adjusting, by the communications device, the contention window value to a minimum contention window value when the proportion, in the N pieces of first reference data, of the first reference data for which the communications device receives an ACK and the first reference data for which the communications device receives a NACK exceeds the eighth threshold or the proportion, in the N pieces of first reference data, of the first reference data for which the communications device does not receive an ACK or a NACK does not exceed the ninth threshold.

6. The method according to any one of claims 1 to 5, wherein the method further comprises:
maintaining, by the communications device after the first time window, the contention window value by using a second rule, based on the responses of the N pieces of first reference data.

7. The method according to claim 6, wherein the maintaining, by the communications device after the first time window, the contention window value by using a second rule, based on the responses of the N pieces of first reference data comprises:
when the first time window ends, maintaining, by the communications device, the contention window value by using the second rule based on the responses of the N pieces of first reference data; or
when receiving a response of at least one piece of first reference data after the first time window ends, maintaining, by the communications device, the contention window value by using the second rule based on the responses of the N pieces of first reference data; or
before performing a data transmission process after the first time window ends, maintaining, by the communications device, the contention window value by using the second rule based on the responses of the N pieces of first reference data.

8. The method according to claim 6 or 7, wherein the maintaining, by the communications device, the contention window value by using a second rule, based on the responses of the N pieces of first reference data comprises:
increasing, by the communications device, the contention window value based on the current contention window value when the proportion, in the N pieces of first reference data, of the first reference data for which the communications device receives an ACK does not exceed a tenth threshold or the proportion, in the N pieces of first reference data, of the first reference data for which the communications device does not receive an ACK exceeds an eleventh threshold; or
adjusting, by the communications device, the contention window value to the minimum contention window value when the proportion, in the N pieces of first reference data, of the first reference data for which the communications device receives an ACK exceeds the tenth threshold or the proportion, in the N pieces of first reference data, of the first reference data for which the communications device does not receive an ACK does not exceed the eleventh threshold.

9. The method according to claim 6 or 7, wherein the maintaining, by the communications device, the contention window value by using a second rule, based on the responses of the N pieces of first reference data comprises:
increasing, by the communications device, the contention window value based on the current contention window value when the proportion, in the N pieces of first reference data, of the first reference data for which the communications device receives an ACK and the first reference data for which the communications device receives a NACK does not exceed a twelfth threshold or the proportion, in the N pieces of first reference data, of the first reference data for which the communications device does not receive an ACK or a NACK exceeds a thirteenth threshold; or
adjusting, by the communications device, the contention window value to the minimum contention window value when the proportion, in the N pieces of first reference data, of the first reference data for which the communications device receives an ACK and the first reference data for which the communications device receives a NACK exceeds the twelfth threshold or the proportion, in the N pieces of first reference data, of the first reference data for which the communications device does not receive an ACK or a NACK does not exceed the thirteenth threshold.

10. The method according to any one of claims 1 to 9, wherein the method further comprises:
receiving, by the communications device, a response of any piece of first reference data at least once, and using a last received response of the first reference data as a final response of the first reference data.

11. The method according to any one of claims 1 to 10, wherein
a start moment of the first time window precedes or follows the first reference time, wherein when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, wherein the target time domain resource is a preset earliest time domain resource used for transmitting the responses of the N pieces of first reference data.

12. The method according to any one of claims 1 to 11, wherein
a size of the first time window may be preset, be agreed upon between the communications device and a receive end, be configured by the communications device for the receive end, or be equal to maximum duration for which the receive end waits for the communications device to schedule a response resource.

13. The method according to any one of claims 1 to 12, wherein the first time window is maintained by using a timer.

14. The method according to any one of claims 1 to 13, wherein the first reference time is located in an L^{th} data transmission process, the first time window corresponds to the first reference time, and L is an integer greater than 0; and the method further comprises:
after K^{th} reference time, receiving, by the communications device, a response of at least one piece of (K-Y)^{th} reference data, wherein the (K-Y)^{th} reference data is reference data that has been sent within (K-Y)^{th} reference time, the (K-Y)^{th} reference time is located in an (L+K-Y)^{th} data transmission process, Y is an integer greater than 0 and less than K, the K^{th} reference time is located in an (L+K)^{th} data transmission process, the communications device has sent M pieces of second reference data within the K^{th} reference time, M is an integer greater than 0, and K is an integer greater than 1;
redetermining, by the communications device based on a contention window actually used in the (L+K-Y)^{th} data transmission process and a last received response of each piece of (K-Y)^{th} reference data, a contention window value that needs to be used in an (L+K-Y+1)^{th} data transmission process;
determining, by the communications device based on a contention window value that needs to be used in a previous data transmission process and a last received response of reference data that has been sent within reference time in the previous data transmission process, a contention window value that needs to be used in a current data transmission process; and repeating the foregoing step until a contention window value that needs to be used in the (L+K)^{th} data transmission process is determined;
updating, by the communications device, the current contention window value to the contention window value that needs to be used in the (L+K)^{th} data transmission process; and
maintaining, by the communications device in a K^{th} time window corresponding to the K^{th} reference time, the contention window value by using the first rule based on responses of the M pieces of second reference data.

15. A communications device, comprising:
a transceiver, configured to receive and send data; and
a processor, configured to maintain a contention window value in a first time window by using a first rule, based on responses of N pieces of first reference data sent by the transceiver within first reference time, wherein N is an integer greater than 0.

16. The communications device according to claim 15, wherein when maintaining the contention window value in the first time window by using the first rule based on the responses of the N pieces of first reference data, the processor is specifically configured to:
increase the contention window value based on a current contention window value when a proportion, in the N pieces of first reference data, of first reference data for which the communications device receives a response ACK does not exceed a first threshold or a proportion, in the N pieces of first reference data, of first reference data for which the communications device does not receive an ACK exceeds a second threshold; or
adjust the contention window value to a minimum contention window value when the proportion, in the N pieces of first reference data, of the first reference data for which the communications device receives an ACK exceeds the first threshold or the proportion, in the N pieces of first reference data, of the first reference data for which the communications device does not receive an ACK does not exceed the second threshold.

17. The communications device according to claim 15, wherein when maintaining the contention window value in the first time window by using the first rule based on the responses of the N pieces of first reference data, the processor is specifically configured to:
adjust the contention window value to a minimum contention window value when a proportion, in the N pieces of first reference data, of first reference data for which the communications device receives an ACK exceeds a third threshold; or
increase the contention window value based on a current contention window value when a proportion, in the N pieces of first reference data, of first reference data for which the communications device receives a negative acknowledgment NACK exceeds a fourth threshold; or
not adjust the contention window value when the proportion, in the N pieces of first reference data, of the first reference data for which the communications device receives an ACK does not exceed the third threshold and the proportion, in the N pieces of first reference data, of the first reference data for which the communications device receives a NACK does not exceed the fourth threshold.

18. The communications device according to claim 15, wherein when maintaining the contention window value in the first time window by using the first rule based on the responses of the N pieces of first reference data, the processor is specifically configured to:
not adjust the contention window value when a proportion, in the N pieces of first reference data, of first reference data for which the communications device receives an ACK and first reference data for which the communications device receives a NACK does not exceed a fifth threshold; or
adjust, by performing the following step, the contention window value when the proportion, in the N pieces of first reference data, of the first reference data for which the communications device receives an ACK and the first reference data for which the communications device receives a NACK exceeds the fifth threshold:
increasing the contention window value based on a current contention window value when a proportion, in the first reference data for which the communications device receives an ACK and the first reference data for which the communications device receives a NACK, of the first reference data for which the communications device receives an ACK does not exceed a sixth threshold or a proportion, in the first reference data for which the communications device receives an ACK and the first reference data for which the communications device receives a NACK, of the first reference data for which the communications device receives a NACK exceeds a seventh threshold; or
adjusting the contention window value to a minimum contention window value when the proportion, in the first reference data for which the communications device receives an ACK and the first reference data for which the communications device receives a NACK, of the first reference data for which the communications device receives an ACK exceeds the sixth threshold or the proportion, in the first reference data for which the communications device receives an ACK and the first reference data for which the communications device receives a NACK, of the first reference data for which the communications device receives a NACK does not exceed the seventh threshold.

19. The communications device according to claim 15, wherein when maintaining the contention window value in the first time window by using the first rule based on the responses of the N pieces of first reference data, the processor is specifically configured to:
increase the contention window value based on a current contention window value when a proportion, in the N pieces of first reference data, of first reference data for which the communications device receives an ACK and first reference data for which the communications device receives a NACK does not exceed an eighth threshold or a proportion, in the N pieces of first reference data, of first reference data for which the communications device does not receive an ACK or a NACK exceeds a ninth threshold; or
adjust the contention window value to a minimum contention window value when the proportion, in the N pieces of first reference data, of the first reference data for which the communications device receives an ACK and the first reference data for which the communications device receives a NACK exceeds the eighth threshold or the proportion, in the N pieces of first reference data, of the first reference data for which the communications device does not receive an ACK or a NACK does not exceed the ninth threshold.

20. The communications device according to any one of claims 15 to 19, wherein the processor is further configured to maintain, after the first time window, the contention window value by using a second rule, based on the responses of the N pieces of first reference data.

21. The communications device according to claim 20, wherein when maintaining, after the first time window, the contention window value by using the second rule based on the responses of the N pieces of first reference data, the processor is specifically configured to:
when the first time window ends, maintain the contention window value by using the second rule based on the responses of the N pieces of first reference data; or
when a response of at least one piece of first reference data is received after the first time window ends, maintain the contention window value by using the second rule based on the responses of the N pieces of first reference data; or
before performing a data transmission process after the first time window ends, maintain the contention window value by using the second rule based on the responses of the N pieces of first reference data.

22. The communications device according to claim 20 or 21, wherein when maintaining the contention window value by using the second rule based on the responses of the N pieces of first reference data, the processor is specifically configured to:
increase the contention window value based on the current contention window value when the proportion, in the N pieces of first reference data, of the first reference data for which the communications device receives an ACK does not exceed a tenth threshold or the proportion, in the N pieces of first reference data, of the first reference data for which the communications device does not receive an ACK exceeds an eleventh threshold; or
adjust the contention window value to the minimum contention window value when the proportion, in the N pieces of first reference data, of the first reference data for which the communications device receives an ACK exceeds the tenth threshold or the proportion, in the N pieces of first reference data, of the first reference data for which the communications device does not receive an ACK does not exceed the eleventh threshold.

23. The communications device according to claim 20 or 21, wherein when maintaining the contention window value by using the second rule based on the responses of the N pieces of first reference data, the processor is specifically configured to:
increase the contention window value based on the current contention window value when the proportion, in the N pieces of first reference data, of the first reference data for which the communications device receives an ACK and the first reference data for which the communications device receives a NACK does not exceed a twelfth threshold or the proportion, in the N pieces of first reference data, of the first reference data for which the communications device does not receive an ACK or a NACK exceeds a thirteenth threshold; or
adjust the contention window value to the minimum contention window value when the proportion, in the N pieces of first reference data, of the first reference data for which the communications device receives an ACK and the first reference data for which the communications device receives a NACK exceeds the twelfth threshold or the proportion, in the N pieces of first reference data, of the first reference data for which the communications device does not receive an ACK or a NACK does not exceed the thirteenth threshold.

24. The communications device according to any one of claims 15 to 23, wherein
the processor is specifically configured to: receive a response of any piece of first reference data at least once by using the transceiver, and use a last received response of the first reference data as a final response of the first reference data.

25. The communications device according to any one of claims 15 to 24, wherein
a start moment of the first time window precedes or follows the first reference time, wherein when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, wherein the target time domain resource is a preset earliest time domain resource used for transmitting the responses of the N pieces of first reference data.

26. The communications device according to any one of claims 15 to 25, wherein
a size of the first time window may be preset, be agreed upon between the communications device and a receive end, be configured by the communications device for the receive end, or be equal to maximum duration for which the receive end waits for the communications device to schedule a response resource.

27. The communications device according to any one of claims 15 to 26, wherein the first time window is maintained by using a timer.

28. The communications device according to any one of claims 15 to 27, wherein the first reference time is located in an L^{th} data transmission process, the first time window corresponds to the first reference time, and L is an integer greater than 0; and the processor is further configured to:
after K^{th} reference time, receive a response of at least one piece of (K-Y)^{th} reference data by using the transceiver, wherein the (K-Y)^{th} reference data is reference data that has been sent within (K-Y)^{th} reference time, the (K-Y)^{th} reference time is located in an (L+K-Y)^{th} data transmission process, Y is an integer greater than 0 and less than K, the K^{th} reference time is located in an (L+K)^{th} data transmission process, the transceiver has sent M pieces of second reference data within the K^{th} reference time, M is an integer greater than 0, and K is an integer greater than 1;
redetermine, based on a contention window actually used in the (L+K-Y)^{th} data transmission process and a last received response of each piece of (K-Y)^{th} reference data, a contention window value that needs to be used in an (L+K-Y+1)^{th} data transmission process;
determine, based on a contention window value that needs to be used in a previous data transmission process and a last received response of reference data that has been sent within reference time in the previous data transmission process, a contention window value that needs to be used in a current data transmission process; and repeat the foregoing step until a contention window value that needs to be used in the (L+K)^{th} data transmission process is determined;
update the current contention window value to the contention window value that needs to be used in the (L+K)^{th} data transmission process; and
maintain, in a K^{th} time window corresponding to the K^{th} reference time, the contention window value by using the first rule based on responses of the M pieces of second reference data.

## Amended claims

### Amended claims under Art. 19.1 PCT

1. A contention window maintenance method, comprising:
maintaining, by a network device in a first time window, a contention window value based on responses of N pieces of first reference data sent by the network device within first reference time, wherein N is an integer greater than 0, the responses comprise an ACK and/or a NACK, and the network device maintains the contention window value based on a proportion of ACKs in the received responses of the N pieces of first reference data and/or a proportion of NACKs in the received responses of the N pieces of first reference data.

2. The method according to claim 1, wherein the network device does not adjust the contention window value when the proportion of the ACKs in the responses that are of the N pieces of first reference data and that are received by the network device in the first time window is equal to 0 and the proportion of the NACKs in the responses that are of the N pieces of first reference data and that are received by the network device in the first time window is equal to 0.

3. The method according to claim 1, wherein the network device increases the contention window value when the proportion of the ACKs in the responses that are of the N pieces of first reference data and that are received by the network device in the first time window is less than or equal to 10%.

4. The method according to claim 1, wherein the network device adjusts the contention window value to a minimum contention window value when the proportion of the ACKs in the responses that are of the N pieces of first reference data and that are received by the network device is greater than 10%.

5. The method according to claim 1, wherein the network device increases the contention window value when a proportion of ACKs in responses received by the network device after the first time window is less than or equal to 10%.

6. The method according to claim 1, wherein a start moment of the first time window follows the first reference time.

7. A communications device, wherein the communications device comprises a memory and a processor connected to the memory, the memory is configured to store instructions, and the processor is configured to execute the instructions, so that the communications device performs the method according to any one of claims 1 to 6.

8. A contention window maintenance method, comprising:
maintaining, by a communications device, a contention window value in a first time window by using a first rule, based on responses of N pieces of first reference data sent by the communications device within first reference time, wherein N is an integer greater than 0.

9. The method according to claim 8, wherein the maintaining, by a communications device, a contention window value in a first time window by using a first rule, based on responses of N pieces of first reference data comprises:
increasing, by the communications device, the contention window value based on a current contention window value when a proportion, in the N pieces of first reference data, of first reference data for which the communications device receives a response ACK does not exceed a first threshold or a proportion, in the N pieces of first reference data, of first reference data for which the communications device does not receive an ACK exceeds a second threshold; or
adjusting, by the communications device, the contention window value to a minimum contention window value when the proportion, in the N pieces of first reference data, of the first reference data for which the communications device receives an ACK exceeds the first threshold or the proportion, in the N pieces of first reference data, of the first reference data for which the communications device does not receive an ACK does not exceed the second threshold.

10. The method according to claim 8, wherein the maintaining, by a communications device, a contention window value in a first time window by using a first rule, based on responses of N pieces of first reference data comprises:
adjusting, by the communications device, the contention window value to a minimum contention window value when a proportion, in the N pieces of first reference data, of first reference data for which the communications device receives an ACK exceeds a third threshold; or
increasing, by the communications device, the contention window value based on a current contention window value when a proportion, in the N pieces of first reference data, of first reference data for which the communications device receives a negative acknowledgment NACK exceeds a fourth threshold; or
skipping adjusting, by the communications device, the contention window value when the proportion, in the N pieces of first reference data, of the first reference data for which the communications device receives an ACK does not exceed the third threshold and the proportion, in the N pieces of first reference data, of the first reference data for which the communications device receives a NACK does not exceed the fourth threshold.

11. The method according to claim 8, wherein the maintaining, by a communications device, a contention window value in a first time window by using a first rule, based on responses of N pieces of first reference data comprises:
skipping adjusting, by the communications device, the contention window value when a proportion, in the N pieces of first reference data, of first reference data for which the communications device receives an ACK and first reference data for which the communications device receives a NACK does not exceed a fifth threshold; or
adjusting, by the communications device by performing the following step, the contention window value when the proportion, in the N pieces of first reference data, of the first reference data for which the communications device receives an ACK and the first reference data for which the communications device receives a NACK exceeds the fifth threshold:
increasing, by the communications device, the contention window value based on a current contention window value when a proportion, in the first reference data for which the communications device receives an ACK and the first reference data for which the communications device receives a NACK, of the first reference data for which the communications device receives an ACK does not exceed a sixth threshold or a proportion, in the first reference data for which the communications device receives an ACK and the first reference data for which the communications device receives a NACK, of the first reference data for which the communications device receives a NACK exceeds a seventh threshold; or
adjusting, by the communications device, the contention window value to a minimum contention window value when the proportion, in the first reference data for which the communications device receives an ACK and the first reference data for which the communications device receives a NACK, of the first reference data for which the communications device receives an ACK exceeds the sixth threshold or the proportion, in the first reference data for which the communications device receives an ACK and the first reference data for which the communications device receives a NACK, of the first reference data for which the communications device receives a NACK does not exceed the seventh threshold.

12. The method according to claim 8, wherein the maintaining, by a communications device, a contention window value in a first time window by using a first rule, based on responses of N pieces of first reference data comprises:
increasing, by the communications device, the contention window value based on a current contention window value when a proportion, in the N pieces of first reference data, of first reference data for which the communications device receives an ACK and first reference data for which the communications device receives a NACK does not exceed an eighth threshold or a proportion, in the N pieces of first reference data, of first reference data for which the communications device does not receive an ACK or a NACK exceeds a ninth threshold; or
adjusting, by the communications device, the contention window value to a minimum contention window value when the proportion, in the N pieces of first reference data, of the first reference data for which the communications device receives an ACK and the first reference data for which the communications device receives a NACK exceeds the eighth threshold or the proportion, in the N pieces of first reference data, of the first reference data for which the communications device does not receive an ACK or a NACK does not exceed the ninth threshold.

13. The method according to any one of claims 8 to 12, wherein the method further comprises:
maintaining, by the communications device after the first time window, the contention window value by using a second rule, based on the responses of the N pieces of first reference data.

14. The method according to claim 13, wherein the maintaining, by the communications device after the first time window, the contention window value by using a second rule, based on the responses of the N pieces of first reference data comprises:
when the first time window ends, maintaining, by the communications device, the contention window value by using the second rule based on the responses of the N pieces of first reference data; or
when receiving a response of at least one piece of first reference data after the first time window ends, maintaining, by the communications device, the contention window value by using the second rule based on the responses of the N pieces of first reference data; or
before performing a data transmission process after the first time window ends, maintaining, by the communications device, the contention window value by using the second rule based on the responses of the N pieces of first reference data.

15. The method according to claim 13 or 14, wherein the maintaining, by the communications device, the contention window value by using a second rule, based on the responses of the N pieces of first reference data comprises:
increasing, by the communications device, the contention window value based on the current contention window value when the proportion, in the N pieces of first reference data, of the first reference data for which the communications device receives an ACK does not exceed a tenth threshold or the proportion, in the N pieces of first reference data, of the first reference data for which the communications device does not receive an ACK exceeds an eleventh threshold; or
adjusting, by the communications device, the contention window value to the minimum contention window value when the proportion, in the N pieces of first reference data, of the first reference data for which the communications device receives an ACK exceeds the tenth threshold or the proportion, in the N pieces of first reference data, of the first reference data for which the communications device does not receive an ACK does not exceed the eleventh threshold.

16. The method according to claim 13 or 14, wherein the maintaining, by the communications device, the contention window value by using a second rule, based on the responses of the N pieces of first reference data comprises:
increasing, by the communications device, the contention window value based on the current contention window value when the proportion, in the N pieces of first reference data, of the first reference data for which the communications device receives an ACK and the first reference data for which the communications device receives a NACK does not exceed a twelfth threshold or the proportion, in the N pieces of first reference data, of the first reference data for which the communications device does not receive an ACK or a NACK exceeds a thirteenth threshold; or
adjusting, by the communications device, the contention window value to the minimum contention window value when the proportion, in the N pieces of first reference data, of the first reference data for which the communications device receives an ACK and the first reference data for which the communications device receives a NACK exceeds the twelfth threshold or the proportion, in the N pieces of first reference data, of the first reference data for which the communications device does not receive an ACK or a NACK does not exceed the thirteenth threshold.

17. The method according to any one of claims 8 to 16, wherein the method further comprises:
receiving, by the communications device, a response of any piece of first reference data at least once, and using a last received response of the first reference data as a final response of the first reference data.

18. The method according to any one of claims 8 to 17, wherein
a start moment of the first time window precedes or follows the first reference time, wherein when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, wherein the target time domain resource is a preset earliest time domain resource used for transmitting the responses of the N pieces of first reference data.

19. The method according to any one of claims 8 to 18, wherein
a size of the first time window may be preset, be agreed upon between the communications device and a receive end, be configured by the communications device for the receive end, or be equal to maximum duration for which the receive end waits for the communications device to schedule a response resource.

20. The method according to any one of claims 8 to 19, wherein the first time window is maintained by using a timer.

21. The method according to any one of claims 8 to 20, wherein the first reference time is located in an L^{th} data transmission process, the first time window corresponds to the first reference time, and L is an integer greater than 0; and the method further comprises:
after K^{th} reference time, receiving, by the communications device, a response of at least one piece of (K-Y)^{th} reference data, wherein the (K-Y)^{th} reference data is reference data that has been sent within (K-Y)^{th} reference time, the (K-Y)^{th} reference time is located in an (L+K-Y)^{th} data transmission process, Y is an integer greater than 0 and less than K, the K^{th} reference time is located in an (L+K)^{th} data transmission process, the communications device has sent M pieces of second reference data within the K^{th} reference time, M is an integer greater than 0, and K is an integer greater than 1;
redetermining, by the communications device based on a contention window actually used in the (L+K-Y)^{th} data transmission process and a last received response of each piece of (K-Y)^{th} reference data, a contention window value that needs to be used in an (L+K-Y+1)^{th} data transmission process;
determining, by the communications device based on a contention window value that needs to be used in a previous data transmission process and a last received response of reference data that has been sent within reference time in the previous data transmission process, a contention window value that needs to be used in a current data transmission process; and repeating the foregoing step until a contention window value that needs to be used in the (L+K)^{th} data transmission process is determined;
updating, by the communications device, the current contention window value to the contention window value that needs to be used in the (L+K)^{th} data transmission process; and
maintaining, by the communications device in a K^{th} time window corresponding to the K^{th} reference time, the contention window value by using the first rule based on responses of the M pieces of second reference data.

22. A communications device, comprising:
a transceiver, configured to receive and send data; and
a processor, configured to maintain a contention window value in a first time window by using a first rule, based on responses of N pieces of first reference data sent by the transceiver within first reference time, wherein N is an integer greater than 0.

23. The communications device according to claim 22, wherein when maintaining the contention window value in the first time window by using the first rule based on the responses of the N pieces of first reference data, the processor is specifically configured to:
increase the contention window value based on a current contention window value when a proportion, in the N pieces of first reference data, of first reference data for which the communications device receives a response ACK does not exceed a first threshold or a proportion, in the N pieces of first reference data, of first reference data for which the communications device does not receive an ACK exceeds a second threshold; or
adjust the contention window value to a minimum contention window value when the proportion, in the N pieces of first reference data, of the first reference data for which the communications device receives an ACK exceeds the first threshold or the proportion, in the N pieces of first reference data, of the first reference data for which the communications device does not receive an ACK does not exceed the second threshold.

24. The communications device according to claim 22, wherein when maintaining the contention window value in the first time window by using the first rule based on the responses of the N pieces of first reference data, the processor is specifically configured to:
adjust the contention window value to a minimum contention window value when a proportion, in the N pieces of first reference data, of first reference data for which the communications device receives an ACK exceeds a third threshold; or
increase the contention window value based on a current contention window value when a proportion, in the N pieces of first reference data, of first reference data for which the communications device receives a negative acknowledgment NACK exceeds a fourth threshold; or
not adjust the contention window value when the proportion, in the N pieces of first reference data, of the first reference data for which the communications device receives an ACK does not exceed the third threshold and the proportion, in the N pieces of first reference data, of the first reference data for which the communications device receives a NACK does not exceed the fourth threshold.

25. The communications device according to claim 22, wherein when maintaining the contention window value in the first time window by using the first rule based on the responses of the N pieces of first reference data, the processor is specifically configured to:
not adjust the contention window value when a proportion, in the N pieces of first reference data, of first reference data for which the communications device receives an ACK and first reference data for which the communications device receives a NACK does not exceed a fifth threshold; or
adjust, by performing the following step, the contention window value when the proportion, in the N pieces of first reference data, of the first reference data for which the communications device receives an ACK and the first reference data for which the communications device receives a NACK exceeds the fifth threshold:
increasing the contention window value based on a current contention window value when a proportion, in the first reference data for which the communications device receives an ACK and the first reference data for which the communications device receives a NACK, of the first reference data for which the communications device receives an ACK does not exceed a sixth threshold or a proportion, in the first reference data for which the communications device receives an ACK and the first reference data for which the communications device receives a NACK, of the first reference data for which the communications device receives a NACK exceeds a seventh threshold; or
adjusting the contention window value to a minimum contention window value when the proportion, in the first reference data for which the communications device receives an ACK and the first reference data for which the communications device receives a NACK, of the first reference data for which the communications device receives an ACK exceeds the sixth threshold or the proportion, in the first reference data for which the communications device receives an ACK and the first reference data for which the communications device receives a NACK, of the first reference data for which the communications device receives a NACK does not exceed the seventh threshold.

26. The communications device according to claim 22, wherein when maintaining the contention window value in the first time window by using the first rule based on the responses of the N pieces of first reference data, the processor is specifically configured to:
increase the contention window value based on a current contention window value when a proportion, in the N pieces of first reference data, of first reference data for which the communications device receives an ACK and first reference data for which the communications device receives a NACK does not exceed an eighth threshold or a proportion, in the N pieces of first reference data, of first reference data for which the communications device does not receive an ACK or a NACK exceeds a ninth threshold; or
adjust the contention window value to a minimum contention window value when the proportion, in the N pieces of first reference data, of the first reference data for which the communications device receives an ACK and the first reference data for which the communications device receives a NACK exceeds the eighth threshold or the proportion, in the N pieces of first reference data, of the first reference data for which the communications device does not receive an ACK or a NACK does not exceed the ninth threshold.

27. The communications device according to any one of claims 22 to 26, wherein the processor is further configured to maintain, after the first time window, the contention window value by using a second rule, based on the responses of the N pieces of first reference data.

28. The communications device according to claim 27, wherein when maintaining, after the first time window, the contention window value by using the second rule based on the responses of the N pieces of first reference data, the processor is specifically configured to:
when the first time window ends, maintain the contention window value by using the second rule based on the responses of the N pieces of first reference data; or
when a response of at least one piece of first reference data is received after the first time window ends, maintain the contention window value by using the second rule based on the responses of the N pieces of first reference data; or
before performing a data transmission process after the first time window ends, maintain the contention window value by using the second rule based on the responses of the N pieces of first reference data.

29. The communications device according to claim 27 or 28, wherein when maintaining the contention window value by using the second rule based on the responses of the N pieces of first reference data, the processor is specifically configured to:
increase the contention window value based on the current contention window value when the proportion, in the N pieces of first reference data, of the first reference data for which the communications device receives an ACK does not exceed a tenth threshold or the proportion, in the N pieces of first reference data, of the first reference data for which the communications device does not receive an ACK exceeds an eleventh threshold; or
adjust the contention window value to the minimum contention window value when the proportion, in the N pieces of first reference data, of the first reference data for which the communications device receives an ACK exceeds the tenth threshold or the proportion, in the N pieces of first reference data, of the first reference data for which the communications device does not receive an ACK does not exceed the eleventh threshold.

30. The communications device according to claim 27 or 28, wherein when maintaining the contention window value by using the second rule based on the responses of the N pieces of first reference data, the processor is specifically configured to:
increase the contention window value based on the current contention window value when the proportion, in the N pieces of first reference data, of the first reference data for which the communications device receives an ACK and the first reference data for which the communications device receives a NACK does not exceed a twelfth threshold or the proportion, in the N pieces of first reference data, of the first reference data for which the communications device does not receive an ACK or a NACK exceeds a thirteenth threshold; or
adjust the contention window value to the minimum contention window value when the proportion, in the N pieces of first reference data, of the first reference data for which the communications device receives an ACK and the first reference data for which the communications device receives a NACK exceeds the twelfth threshold or the proportion, in the N pieces of first reference data, of the first reference data for which the communications device does not receive an ACK or a NACK does not exceed the thirteenth threshold.

31. The communications device according to any one of claims 22 to 30, wherein
the processor is specifically configured to: receive a response of any piece of first reference data at least once by using the transceiver, and use a last received response of the first reference data as a final response of the first reference data.

32. The communications device according to any one of claims 22 to 31, wherein
a start moment of the first time window precedes or follows the first reference time, wherein when the start moment of the first time window precedes the first reference time, an end moment of the first time window follows the first reference time; or
the start moment of the first time window follows a data transmission process in which the first reference time is located; or
the start moment of the first time window precedes or follows a preset target time domain resource, wherein the target time domain resource is a preset earliest time domain resource used for transmitting the responses of the N pieces of first reference data.

33. The communications device according to any one of claims 22 to 32, wherein
a size of the first time window may be preset, be agreed upon between the communications device and a receive end, be configured by the communications device for the receive end, or be equal to maximum duration for which the receive end waits for the communications device to schedule a response resource.

34. The communications device according to any one of claims 22 to 33, wherein the first time window is maintained by using a timer.

35. The communications device according to any one of claims 22 to 34, wherein the first reference time is located in an L^{th} data transmission process, the first time window corresponds to the first reference time, and L is an integer greater than 0; and the processor is further configured to:
after K^{th} reference time, receive a response of at least one piece of (K-Y)^{th} reference data by using the transceiver, wherein the (K-Y)^{th} reference data is reference data that has been sent within (K-Y)^{th} reference time, the (K-Y)^{th} reference time is located in an (L+K-Y)^{th} data transmission process, Y is an integer greater than 0 and less than K, the K^{th} reference time is located in an (L+K)^{th} data transmission process, the transceiver has sent M pieces of second reference data within the K^{th} reference time, M is an integer greater than 0, and K is an integer greater than 1;
redetermine, based on a contention window actually used in the (L+K-Y)^{th} data transmission process and a last received response of each piece of (K-Y)^{th} reference data, a contention window value that needs to be used in an (L+K-Y+1)^{th} data transmission process;
determine, based on a contention window value that needs to be used in a previous data transmission process and a last received response of reference data that has been sent within reference time in the previous data transmission process, a contention window value that needs to be used in a current data transmission process; and repeat the foregoing step until a contention window value that needs to be used in the (L+K)^{th} data transmission process is determined;
update the current contention window value to the contention window value that needs to be used in the (L+K)^{th} data transmission process; and
maintain, in a K^{th} time window corresponding to the K^{th} reference time, the contention window value by using the first rule based on responses of the M pieces of second reference data.
